(19) Europäisches Patentamt
European Patent Office
Office européen des brevets

(11) **EP 2 615 826 B1**

(12) **EUROPÄISCHE PATENTSCHRIFT**

(45) Veröffentlichungstag und Bekanntmachung des Hinweises auf die Patenterteilung:
**04.03.2015 Patentblatt 2015/10**

(51) Int Cl.:
*H04N 5/232* (2006.01)   *G02B 27/64* (2006.01)
*G02B 23/02* (2006.01)

(21) Anmeldenummer: **13150708.9**

(22) Anmeldetag: **09.01.2013**

(54) **Wahrscheinlichkeitsbasierte Bestimmung eines Ansteuerungsmodus für eine Bildstabilisierungseinrichtung**

Probability-based determination of a control mode for an image stabilization device

Détermination basée sur la probabilité d'un mode de commande pour un dispositif de stabilisation d'image

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.01.2012 DE 102012000861**
**13.01.2012 US 201261586336 P**

(43) Veröffentlichungstag der Anmeldung:
**17.07.2013 Patentblatt 2013/29**

(73) Patentinhaber: **Carl Zeiss Sports Optics GmbH**
**35576 Wetzlar (DE)**

(72) Erfinder:
• **Terörde, Steffen**
**35037 Marburg (DE)**
• **Romanovas, Michailas**
**78056 Villingen-Schwenningen (DE)**
• **Klingbeil, Lasse**
**53721 Siegburg (DE)**

(74) Vertreter: **Witte, Weller & Partner Patentanwälte mbB**
**Postfach 10 54 62**
**70047 Stuttgart (DE)**

(56) Entgegenhaltungen:
**GB-A- 2 407 226    US-A1- 2003 231 393**
**US-A1- 2011 102 609**

**Beschreibung**

Die vorliegende Erfindung betrifft ein fernoptisches Gerät mit mindestens einem Tubus, in dem ein optisches System angeordnet ist, mit mindestens einer Bildstabilisierungseinrichtung, die dazu ausgebildet ist, mindestens eine optische Baugruppe des optischen Systems relativ zu dem mindestens einen Tubus zu bewegen, mit mindestens einer Signalverarbeitungseinheit, die derart ausgebildet ist, dass sie mindestens eine Bildstabilisierungseinrichtung in einem Modus aus einer Mehrzahl von Modi ansteuert, wobei jedem Modus eine jeweilige Bewegungssituation des fernoptischen Geräts zugeordnet ist, und mit einer Modusdetektionseinheit, die derart ausgebildet ist, dass sie den Modus aus der Mehrzahl von Modi bestimmt.

Des Weiteren betrifft die vorliegende Erfindung ein Verfahren zum Bestimmen eines Modus für eine Ansteuerung einer Bildstabilisierungseinrichtung in einem fernoptischen Gerät, wobei die Bildstabilisierungseinrichtung in einem Modus aus einer Mehrzahl von Modi angesteuert wird, wobei jedem Modus eine jeweilige Bewegungssituation des fernoptischen Geräts zugeordnet ist.

Ein derartiges fernoptisches Gerät und ein derartiges Verfahren sind beispielsweise aus der Druckschrift DE 199 37 775 A1 bekannt.

Bei den fernoptischen Geräten im Rahmen der vorliegenden Erfindung kann es sich insbesondere um monokulare oder binokulare Fernrohre handeln. Wenn im Folgenden daher von einem monokularen oder binokularen Fernrohr gesprochen wird, ist dieses jedoch keinesfalls einschränkend hinsichtlich der Art des fernoptischen Geräts zu verstehen. Grundsätzlich kann es sich auch um andere fernoptische Geräte als modulare oder binokulare Fernrohre handeln, beispielsweise um eine Kamera.

Fernoptische Geräte weisen häufig eine Bildstabilisierung auf, um Zitterdrehbewegungen des fernoptischen Geräts zu kompensieren. Die Zitterbewegungen können dabei von einem Nutzer des fernoptischen Geräts herrühren, der das fernoptische Gerät vor seine Augen hält, sie können aber auch von einem bestimmten Untergrund verursacht sein, beispielsweise wenn der Nutzer sich auf einem Schiff befindet. Die Zitterbewegungen erfolgen dabei zumeist in erster Linie um eine Hochachse und eine Querachse des fernoptischen Geräts. Unter diesen Zitterdrehbewegungen leidet eine sichtbare Bildauflösung und macht kleine Bilddetails nicht erkennbar. Zudem wird das verwackelte Bild von einem Nutzer häufig als störend empfunden.

Im Stand der Technik sind daher verschiedene Vorschläge für Arten der Bildstabilisierung gemacht worden. Beispielsweise sind rein mechanische Bildstabilisierungen bekannt. Diese können rein passiv wirken, etwa nach Art einer Wirbelstrombremse. Es sind jedoch auch aktive Systeme bekannt, die mittels Aktuatoren auf eine Bildstabilisierungseinrichtung einwirken.

Insbesondere kann eine Einbettung der Aktuatoren eines aktiven mechanischen Bildstabilisierungssystems in einen Regelungskreis erfolgen, wobei die Aktuatoren von einer zentralen Signalverarbeitungseinheit des fernoptischen Geräts angesteuert werden. Auch die Art der optischen Elemente, auf die mittels der Bildstabilisierungseinrichtung eingewirkt wird, um die Bildstabilisierung herbeizuführen, kann verschieden sein. Im Stand der Technik wurden verschiedene Lösungsmöglichkeiten hierfür vorgeschlagen, etwa das Umkehrsystem, das ein Linsenumkehrsystem oder ein Prismenumkehrsystem sein kann, relativ zu einem Tubus bzw. Gehäuseelement des fernoptischen Geräts um eine oder mehrere Achsen zu verdrehen, oder das Objektiv oder ein Teil des Objektivs senkrecht zu einer optischen Achse des fernoptischen Geräts zu bewegen. Auch rein softwarebasierte Implementierungen einer Bildstabilisierung sind möglich, insbesondere im Zusammenwirken mit einer digitalen Bildaufnahme. Außer bei rein passiv arbeitenden mechanischen Systemen ist eine Verwendung der vorliegenden Erfindung grundsätzlich zusammen mit allen anderen Arten einer Bildstabilisierung denkbar.

Bei einer Bildstabilisierung ist es gewünscht, dass nur dann eine Kompensation der Bewegungen des fernoptischen Geräts aufgrund äußerer Einflüsse erfolgt, wenn die Bewegungen unabsichtlich sind. Diese unabsichtlichen Bewegungen werden im Rahmen dieser Anmeldung als Zitterbewegungen bzw. Zitterdrehbewegungen bezeichnet. Hiervon zu unterscheiden sind jedoch absichtliche Bewegungen, beispielsweise wenn ein Nutzer das fernoptische Gerät verschwenkt, um ein anderes Objekt zu betrachten, oder wenn der Nutzer während einer Betrachtung einem sich bewegenden Objekt folgt. Naturgemäß soll bei diesen absichtlichen Bewegungen keine Kompensation der Bewegung erfolgen. Ansonsten würde es zunächst zu dem für den Nutzer irritierenden Verhalten des fernoptischen Geräts kommen, dass das Bild stehen bleibt, obwohl er das fernoptische Gerät verschwenkt. Des Weiteren würde eine Bildstabilisierungseinrichtung ab eines gewissen Bewegungsumfangs eine maximal mögliche Kompensation bzw. Auslenkung erreichen und dort anschlagen.

Daher ist in den fernoptischen Geräten in der Regel eine im Folgenden Modusdetektionseinheit genannte Einrichtung vorgesehen, die hardware- als auch softwareimplementiert sein kann. Die Modusdetektionseinheit kann separat, aber auch beispielsweise als Teil der zentralen Signalverarbeitungseinheit vorgesehen sein und dient dazu, zwischen ungewollten Zitterdrehbewegungen und absichtlichen Schwenk- oder Kippbewegungen zu unterscheiden. Es wird daher zwischen verschiedenen Bewegungssituationen unterschieden, denen jeweils ein entsprechender Modus der Bildstabilisierung zugeordnet ist, und der dem Charakter der Bewegungssituation, d.h. ob diese ungewollt oder gewollt ist, Rechnung trägt. Für die Unterscheidung zwischen verschiedenen Bewegungssituationen bzw. der damit einhergehenden Festsetzung eines Modus der Bildstabilisierung wurden bereits verschiedene Vorschläge gemacht.

So zeigt beispielsweise die eingangs genannte Druckschrift DE 199 37 775 A1 einen Pegeldetektor, der ein aktuelles Winkelgeschwindigkeitssignal erfasst und anhand eines Schwellwertvergleichs einen Einfluss auf die Art der Ansteuerung einer Bildstabilisierungseinrichtung nimmt, etwa indem ein Hochpassfilter und eine Integratoreinheit des Winkelgeschwindigkeitssignals überbrückt werden. Die Unterscheidung zwischen verschiedenen Modi der Bildstabilisierung findet somit anhand eines festen Schwellwerts statt.

Die Druckschrift US 6 384 976 B1 zeigt ebenfalls die Bestimmung des Modus der Bildstabilisierung anhand eines Vergleichs eines Winkelgeschwindigkeitssignals mit einem festen Schwellwert. Wird ein Schwellwert überschritten, findet ein Umschalten in einen anderen Modus statt. Wird derselbe Schwellwert oder ein anderer Schwellwert wieder unterschritten, wird in den ursprünglichen Modus zurückgeschaltet.

Die Druckschrift US 7 460 154 B2 zeigt ebenfalls eine Bestimmung des Modus der Bildstabilisierung anhand eines Vergleichs einer Winkelgeschwindigkeit und/oder eines Winkels mit einem festen Schwellwert.

Auch die Druckschrift EP 1 980 904 A2 zeigt eine Unterscheidung zwischen verschiedenen Modi einer Bildstabilisierung anhand eines Vergleichs mit einem bestimmten Schwellwert.

Letztlich schlägt auch die Druckschrift EP 1 708 019 A1 vor, einen Vergleich mit einem festen Schwellwert durchzuführen, in diesem Fall anhand eines von einer zentralen Datenverarbeitungseinheit berechneten Korrekturwerts zur Ansteuerung der Bildstabilisierungseinrichtung.

Letztlich beschäftigt sich eine vereinzelte andere Lösungsmöglichkeit in der Druckschrift US 5 930 530 A mit der Vorhersage von Schwingungen durch eine Erkennung von Regelmäßigkeiten und eine entsprechende Ansteuerung aufgrund einer daraus abgeleiteten Vorhersage. Hier wird jedoch nicht zwischen bestimmten Modi unterschieden.

Zur Unterscheidung zwischen mehreren Modi bzw. zum Bestimmen eines bestimmten Modus für die Bildstabilisierung wird im Stand der Technik also vorgeschlagen, einen Vergleich mit einem festen Schwellwert vorzunehmen. Der für den Schwellwert festgesetzte Wert beeinflusst jedoch das Verhalten des fernoptischen Geräts unveränderlich. Wird ein solcher Schwellwert zu niedrig bzw. zu hoch eingereicht, wird beispielsweise eine absichtliche Bewegung des fernoptischen Geräts erkannt, obwohl diese gar nicht absichtlich ist. Des Weiteren kann es vorkommen, dass eine sehr langsame absichtliche Schwenk- bzw. Kippbewegung nicht als absichtliche Bewegung erkannt wird und folglich von der Bildstabilisierung kompensiert wird. Für einen Nutzer kann es darüber hinaus von seinem individuellen Nutzungsverhalten abhängen, welches Stabilisierungsverhalten bzw. welche Schwellwerte er überhaupt als angenehm bzw. passend empfindet.

Es ist daher eine Aufgabe der vorliegenden Erfindung, ein fernoptisches Gerät bzw. ein Verfahren anzugeben, das eine verbesserte Bestimmung eines Modus der Bildstabilisierung bereitstellt.

Gemäß einem ersten Aspekt der Erfindung wird daher vorgeschlagen, das eingangs genannte fernoptische Gerät dahingehend weiterzubilden, dass die Modusdetektionseinheit des Weiteren derart ausgebildet ist, dass sie den Modus bestimmt, indem sie eine Wahrscheinlichkeit für ein Vorliegen einer ersten Bewegungssituation ermittelt, der ein erster Modus zugeordnet ist, und basierend auf einem Vergleich der ermittelten Wahrscheinlichkeit mit einer Zufallszahl eine Entscheidung über eine Ansteuerung in dem ersten Modus trifft.

Gemäß einem zweiten Aspekt der Erfindung wird vorgeschlagen, das eingangs genannte Verfahren dahingehend weiterzubilden, dass der Modus aus der Mehrzahl von Modi ermittelt wird, indem eine Wahrscheinlichkeit für ein Vorliegen einer ersten Bewegungssituation bestimmt wird, der ein erster Modus zugeordnet ist, und anhand eines Vergleichs der ermittelten Wahrscheinlichkeit mit einer Zufallszahl eine Entscheidung über eine Ansteuerung in dem ersten Modus getroffen wird.

Gemäß einem dritten Aspekt der Erfindung wird ein Computerprogramm mit Programmcodemitteln vorgeschlagen, das dazu ausgebildet ist, alle Schritte eines Verfahrens gemäß dem zweiten Aspekt der Erfindung oder einer seiner Ausgestaltungen auszuführen, wenn das Computerprogramm auf einem Computer ausgeführt wird.

Gemäß einem vierten Aspekt der Erfindung wird ein Computerprogrammprodukt mit Programmcodemitteln vorgeschlagen, die auf einem computerlesbaren Datenträger gespeichert sind, um ein Verfahren gemäß dem zweiten Aspekt der Erfindung oder einer seiner Ausgestaltungen durchzuführen, wenn das Computerprogramm auf einem Computer oder einer entsprechenden Datenverarbeitungseinheit ausgeführt wird.

Statt eines festen Schwellwerts wird erfindungsgemäß somit letztendlich eine zufallsabhängige Funktion zur Bestimmung eines Modus der Bildstabilisierung vorgeschlagen, insbesondere zur Unterscheidung zwischen nicht zu stabilisierenden Bewegungen, d.h. gewollten Schwenk- und Drehbewegungen, und zu stabilisierenden Bewegungen, d.h. ungewollten Zitterbewegungen. Die Unterscheidung ist somit nicht mehr aufgrund der festen Schwellwerte starr, sondern es erfolgt ein weicherer zufallsabhängiger Übergang zwischen den verschiedenen Modi, was von einem Nutzer des fernoptischen Geräts in der Regel als angenehm empfunden wird.

Bei der ersten Bewegungssituation kann es sich beispielsweise um die Bewegungssituation "gewolltes Schwenken bzw. Drehen" handeln, es kann sich aber beispielsweise auch um die Bewegungssituation "ungewolltes Zittern" handeln. Die Wahrscheinlichkeit, dass diese erste Bewegungssituation vorliegt, ist dabei dynamisch abhängig von einem Bewegungsverhalten des fernoptischen Geräts. Unter dem Begriff "Zufallszahl" ist sowohl eine Pseudozufallszahl als auch eine echte Zufallszahl zu verstehen. Die Entscheidung über die Ansteuerung wird anhand eines Vergleichs der Wahrscheinlichkeit mit der Zufallszahl getroffen. Insbesondere sind ein Zahlenbereich der Wahrscheinlichkeit und ein Zahlenbereich der Zufallszahl gleich.

Beispielsweise kann die Wahrscheinlichkeit in Form einer Zahl zwischen 0 und 1 ausgedrückt werden. Entsprechend kann auch die Zufallszahl in einem Bereich zwischen 0 und 1 liegen. Die erzeugte Zufallszahl sollte natürlich gleichmäßig über den Bereich verteilt sein. Die Entscheidung kann dann anhand einer Abfrage getroffen werden, ob die Zufallszahl kleiner oder gleich der Wahrscheinlichkeit ist. Je nachdem, ob diese Aussage wahr oder falsch ist, kann so eine Entscheidung getroffen werden. Insbesondere kann es sich bei der Mehrzahl von Modi um genau zwei Modi handeln, insbesondere wobei ein erster Modus einer Bewegungssituation "gewollte Bewegung" und ein zweiter Modus einer Bewegungssituation "ungewollte Bewegung" zugeordnet ist.

Auf diese Weise wird der Vorteil bereitgestellt, dass die Bestimmung des Modus nicht anhand einer starren sondern anhand einer dynamischen Entscheidung gefällt wird. Zudem ist der Zeitpunkt der Entscheidung über einen Wechsel des Modus für einen Nutzer nicht vorhersagbar. Zudem werden über eine Variation der Bestimmung der Wahrscheinlichkeit für die erste Bewegungssituation Möglichkeiten eröffnet, das Stabilisierungsverhalten nutzerspezifisch anzupassen. Auch wird ein Fehlverhalten der Bildstabilisierung aufgrund falsch festgelegter Schwellwerte vermieden. Die aus dem Stand der Technik bekannten Nachteile können so beseitigt werden.

Die eingangs gestellte Aufgabe wird somit vollkommen gelöst.

In einer Ausgestaltung der Erfindung gemäß dem ersten Aspekt kann vorgesehen sein, dass die Modusdetektionseinheit derart ausgebildet ist, dass sie eine Entscheidung über eine Ansteuerung in dem ersten Modus trifft, indem sie eine Entscheidung über einen Wechsel in den ersten Modus trifft, wenn die mindestens eine Signalverarbeitungseinheit die mindestens eine Bildstabilisierungseinrichtung in einem anderen zweiten Modus ansteuert, und eine Entscheidung über einen Verbleib in dem ersten Modus trifft, wenn die mindestens eine Signalverarbeitungseinheit die mindestens eine Bildstabilisierungseinrichtung bereits in dem ersten Modus ansteuert.

Entsprechend kann auch bei dem erfindungsgemäßen Verfahren gemäß dem zweiten Aspekt in einer Ausgestaltung vorgesehen sein, dass die Entscheidung über die Ansteuerung in dem ersten Modus getroffen wird, indem eine Entscheidung über einen Wechsel in den ersten Modus getroffen wird, wenn die mindestens eine Bildstabilisierungseinrichtung in einem anderen zweiten Modus angesteuert wird, und eine Entscheidung über ein Verbleiben in dem ersten Modus getroffen wird, wenn die mindestens eine Bildstabilisierungseinrichtung bereits in dem ersten Modus angesteuert wird.

In der Regel ist der Bildstabilisierung zunächst ein Modus als Startbedingung vorgegeben. Wird nunmehr eine Entscheidung darüber getroffen, dass eine Bewegungssituation vorliegt, der der erste Modus zugeordnet ist, wird in den ersten Modus gewechselt, wenn der momentan vorliegende Modus ein anderer Modus ist, und in dem ersten Modus verblieben, wenn der momentan vorliegende Modus tatsächlich auch der erste Modus ist. Somit wird der Wechsel des Modus bzw. ein Verbleiben in einem Modus zufalls- bzw. wahrscheinlichkeitsabhängig entschieden. Insbesondere kann sowohl bei der Ausgestaltung des fernoptischen Geräts als auch bei der Ausgestaltung des Verfahrens vorgesehen sein, dass genau zwei Modi die Mehrzahl der Modi bilden. Ein Modus entspricht dabei der Bewegungssituation "gewollte Bewegungen", der andere Modus entspricht dabei der Bewegungssituation "ungewollte Bewegungen". Der erste Modus kann dann beispielsweise der Bewegungssituation "gewollte Bewegungen" zugeordnet sein.

In einer weiteren Ausgestaltung des fernoptischen Geräts gemäß dem ersten Aspekt kann vorgesehen sein, dass die Modusdetektionseinheit derart ausgebildet ist, dass sie die Wahrscheinlichkeit anhand der Formel

$$p(\sigma, T, k) = \frac{1}{1 + e^{-k(\sigma - T)}}$$

ermittelt, wobei p die Wahrscheinlichkeit, k und T jeweils ein Parameter größer Null und $\sigma$ der Wert eines über einen bestimmten Zeitraum integrierten Eingangssignals ist.

Entsprechend kann auch bei den Verfahren gemäß dem zweiten Aspekt der Erfindung in einer Ausgestaltung vorgesehen sein, dass die Wahrscheinlichkeit anhand der Formel

$$p(\sigma, T, k) = \frac{1}{1 + e^{-k(\sigma - T)}}$$

ermittelt wird, wobei p die Wahrscheinlichkeit, k und T jeweils ein Parameter größer Null und σ der Wert eines über einen bestimmten Zeitraum integrierten Eingangssignals ist.

Das Eingangssignal stammt dabei von einem Sensorelement, das eine Bewegung oder eine Geschwindigkeit oder eine Beschleunigung des fernoptischen Geräts erfasst. Dies kann sowohl eine translatorische Bewegung oder translatorische Geschwindigkeit oder translatorische Beschleunigung sein als auch ein Winkel oder eine Winkelgeschwindigkeit oder eine Winkelbeschleunigung. Insbesondere kann vorgesehen sein, dass das Eingangssignal das Messsignal eines Drehratensensors, zum Beispiel vom Typ ST LPY503AL des Unternehmens STMicroelectronics ist, der eine Winkelgeschwindigkeit des fernoptischen Geräts um eine oder mehrere Achsen in Bezug auf ein ruhendes Inertialsystem erkennen kann.

Mittels des Sensorelements werden Messsignale mit einer festen Frequenz, zum Beispiel 100 Hz, aufgenommen. Es wird dann jeweils über eine feste bzw. bestimmte Anzahl der zuletzt aufgenommenen Signale integriert, d.h. über den bestimmten Zeitraum integriert, um eine aktuelle Bewegungssituation auszuwerten. Wird beispielsweise bei einer Messsignalfrequenz von 100 Hz über die letzten 20 Signale integriert, wird eine Bewegungssituation der letzten 200 ms bewertet. Diese integrierte Bewegung σ wird zur Bestimmung der Wahrscheinlichkeit des Vorliegens einer bestimmten Bewegungssituation verwendet.

Die angegebene Funktion p(σ,T,k) liefert letztendlich einen Zahlenwert $0 \leq p \leq 1$, der die Wahrscheinlichkeit für das Vorliegen der ersten Bewegungssituation angibt. Selbstverständlich hängt es dabei von der Anzahl der behandelten Nachkommastellen und einer eventuellen Rundung ab, ob der Wert "0" tatsächlich erreicht werden kann. Insbesondere wird somit über die Funktion p(σ,T,k) definiert, wie groß die Wahrscheinlichkeit ist, ob die Bewegungssituation "gewollte Bewegung" vorliegt. Je größer das integrierte Eingangssignal ist, desto höher ist folglich die Wahrscheinlichkeit für diese Bewegungssituation und damit auch für einen Wechsel bzw. einen Verbleib in dem der Bewegungssituation zugeordneten Modus.

Die Parameter T und k können grundsätzlich frei gewählt werden. Der Parameter T ist dabei die "Schwelle" der Funktion, d.h. derjenige Wert für σ, bei dem die Wahrscheinlichkeit 50 % bzw. 0,5 beträgt. Skaliert man das Eingangssignal σ mittels eines festgelegten Maximalwerts auf einen Bereich zwischen 0 und 1, kann der Paramter T grundsätzlich ebenfalls in dem Bereich zwischen 0 und 1 liegen. Insbesondere kann der Parameter T dann in einem Bereich von 0,25 bis 0,6 liegen, insbesondere 0,25, 0,3, 0,4, 0,5 oder 0,6 betragen. Der Parameter k ist die Steigung in diesem Punkt. Damit kann der Parameter grundsätzlich einen beliebigen positiven Wert annehmen. Skaliert man das Eingangssignal σ mittels eines festgelegten Maximalwerts auf einen Bereich zwischen 0 und 1, kann der Parameter k insbesondere in einem Bereich von 5 bis 25 liegen, insbesondere 5, 8, 10, 12, 15, 18, 20 betragen. Insbesondere können die Parameter abhängig von einem gegenwärtig vorliegenden Modus der Bildstabilisierung gewählt sein. Somit kann beispielsweise für einen Wechsel in den ersten Modus ein anderer Verlauf der Wahrscheinlichkeitsfunktion abhängig von dem aufintegrierten Eingangssignal gewählt sein als für einen Verbleib in dem ersten Modus. Je höher eine entsprechende Wahrscheinlichkeit ist, desto wahrscheinlicher ist es, dass eine Zufallszahl kleiner oder gleich der Wahrscheinlichkeit ist und somit eine Entscheidung über einen Wechsel bzw. einen Verbleib in dem ersten Modus erfolgt. Auf diese Weise kann eine binäre Entscheidung über den Modus der Bildstabilisierung getroffen werden.

In einer weiteren Ausgestaltung des fernoptischen Geräts gemäß dem ersten Aspekt kann vorgesehen sein, dass die Modusdetektionseinheit derart ausgebildet ist, dass sie die Wahrscheinlichkeit anhand der Formel

$$p(\sigma, T, k) = \begin{cases} 0 \; f\ddot{u}r \, \sigma < T - k \\ \dfrac{\sigma - (T - k)}{2 \cdot k} \; f\ddot{u}r \, T - k \leq \sigma \leq T + k \\ 1 \; f\ddot{u}r \, \sigma > T + k \end{cases}$$

ermittelt, wobei p die Wahrscheinlichkeit, k und T jeweils ein Parameter größer Null bzw. ein positiver Parameter und σ der Wert eines über einen bestimmten Zeitraum integrierten Eingangssignals ist.

Entsprechend kann auch bei dem erfindungsgemäßen Verfahren gemäß dem zweiten Aspekt der Erfindung in einer Ausgestaltung vorgesehen sein, dass die Wahrscheinlichkeit anhand der Formel

$$p(\sigma, T, k) = \begin{cases} 0 \; f\ddot{u}r \, \sigma < T - k \\ \dfrac{\sigma - (T-k)}{2 \cdot k} \; f\ddot{u}r \, T - k \leq \sigma \leq T + k \\ 1 \; f\ddot{u}r \, \sigma > T + k \end{cases}$$

ermittelt wird, wobei p die Wahrscheinlichkeit, k und T jeweils ein Parameter größer Null bzw. ein positiver Parameter und σ der Wert eines über einen bestimmten Zeitraum integrierten Eingangssignals ist.

Die Berechnung einer Exponentialfunktion ist relativ aufwändig, insbesondere bei einer Verwendung von Mikrocontrollern mit lediglich beschränkter Rechenleistung. Um daher eine schnellere Berechnung der Wahrscheinlichkeit zu ermöglichen, kann eine linear angenäherte Funktion zur Ermittlung der Wahrscheinlichkeit p(σ,T,k) benutzt werden. Hierdurch wird der Rechenaufwand für die Ermittlung der Wahrscheinlichkeit deutlich verringert.

In einer weiteren Ausgestaltung des fernoptischen Geräts gemäß dem ersten Aspekt der Erfindung kann vorgesehen sein, dass die Modusdetektionseinheit derart ausgebildet ist, dass die Wahrscheinlichkeit abhängig von einer über einen bestimmten Zeitraum integrierten Eingangssignal ist, wobei das Eingangssignal eine Geschwindigkeit oder Winkelgeschwindigkeit des fernoptischen Geräts ist.

Entsprechend kann auch bei dem erfindungsgemäßen Verfahren gemäß dem zweiten Aspekt der Erfindung in einer Ausgestaltung vorgesehen werden, dass die Wahrscheinlichkeit abhängig von einem über einen bestimmten Zeitraum aufintegrierten Eingangssignal ermittelt wird, wobei das Eingangssignal eine Geschwindigkeit oder Winkelgeschwindigkeit des fernoptischen Geräts ist.

Eine Geschwindigkeit bzw. Winkelgeschwindigkeit lässt sich mittels bekannter Sensorelemente relativ gut bestimmen. Das integrierte Eingangssignal liefert dann eine Strecke bzw. einen Winkel, wobei eine größere Strecke bzw. ein größerer Winkel ein relativ zuverlässiges Maß für das Vorliegen einer bestimmten Bewegungssituation sein kann, insbesondere für das Vorliegen einer gewollten Schwenk- bzw. Drehbewegung.

In einer weiteren Ausgestaltung des fernoptischen Geräts gemäß dem ersten Aspekt der Erfindung kann vorgesehen sein, dass die Modusdetektionseinheit derart ausgebildet ist, dass die Wahrscheinlichkeit abhängig von einem über einen bestimmten Zeitraum integrierten Eingangssignal ist, wobei das Eingangssignal eine Beschleunigung oder Winkelbeschleunigung des fernoptische Geräts ist.

Entsprechend kann auch bei dem erfindungsgemäßen Verfahren gemäß dem zweiten Aspekt der Erfindung in einer Ausgestaltung vorgesehen sein, dass die Wahrscheinlichkeit abhängig von einem über einen bestimmten Zeitraum aufintegrierten Eingangssignal ermittelt wird, wobei das Eingangssignal eine Beschleunigung oder Winkelbeschleunigung des fernoptischen Geräts ist.

Entsprechend ist in diesem Fall das integrierte Eingangssignal eine Geschwindigkeit bzw. Winkelgeschwindigkeit. Insbesondere in dem Fall, dass lediglich zwischen zwei Modi unterschieden wird, wobei der erste Modus der Bewegungssituation "gewollte Bewegungen" und der zweite Modus der Bewegungssituation "ungewollte Bewegungen" zugeordnet ist, ergibt sich dann bei einer gleichförmigen gewollten Schwenk- oder Kippbewegung, da diese eine Beschleunigung von Null aufweist, nur eine sehr geringe Wahrscheinlichkeit bzw. eine Wahrscheinlichkeit von Null. Ein Wechsel bzw. ein Verbleib in dem ersten Modus, der an für sich gerade der Bewegungssituation "gewollte Bewegungen" zugeordnet wäre, würde dann nicht erfolgen, sondern eine Bildstabilisierung wie bei einer Zitterdrehbewegung bzw. wie in der Bewegungssituation "ungewollte Bewegungen" würde erfolgen. Somit würde während der gleichförmigen Schwenk- oder Kippbewegung eine Kompensation von ungewollten Zitterdrehbewegungen erfolgen. Dabei sollte dann die Ansteuerung der Bildstabilisierungseinrichtung derart ausgestaltet sein, dass die gleichförmige Schwenk- oder Kippbewegung dann nicht kompensiert bzw. ignoriert wird.

In einer weiteren Ausgestaltung des fernoptischen Geräts gemäß dem ersten Aspekt der Erfindung kann vorgesehen sein, dass die Modusdetektionseinheit derart ausgebildet ist, dass die Zufallszahl aus einem Rauschen eines Sensorsignals eines Sensorelements des fernoptischen Geräts gebildet ist.

Entsprechend kann auch bei dem Verfahren gemäß dem zweiten Aspekt der Erfindung vorgesehen sein, dass die Zufallszahl aus einem Rauschen eines Sensorsignals eines Senorelements des fernoptischen Geräts gebildet wird.

Grundsätzlich kann die Zufallszahl durch entsprechende Algorithmen berechnet werden, viele Mikrocontroller bieten optimierte Funktionen hierzu an. Die Berechnung einer solchen Zufallszahl bzw. Pseudozufallszahl ist jedoch umso aufwändiger, je besser die Qualität der Zufallszahl sein soll. Eine andere Möglichkeit, sogar zur Erzeugung einer echten Zufallszahl, besteht daher darin, die Zufallszahl aus dem auftretenden Rauschen eines Sensorsignals eines Sensorelements des fernoptischen Geräts zu bilden, beispielsweise aus dem Rauschen eines Winkelgeschwindigkeitssensors. Beispielsweise kann die jeweils letzte binäre Stelle des aufgenommenen Messsignals als Zufallszahl vom Wert entweder 0 oder 1 betrachtet werden, wobei durch eine geeignete Kombination bzw. Aneinanderreihung dieser Zahlen eine Zufallszahl erzeugt werden kann. Beispielsweise können die jeweils letzten acht gemessenen binären Zufallssignale durch jeweilige Verschiebungen eine natürliche Zufallszahl in einem Bereich von 0 bis 255 generieren. Dieser Bereich könnte entsprechend auf den Bereich der Wahrscheinlichkeit von 0 bis 1 transformiert werden. Natürlich können auch mehr oder weniger als die letzten acht gemessenen binären Zufallssignale verwendet werden, verwendet man beispielsweise mehr als acht binäre Zufallssignale, findet eine höhere Auflösung des Bereichs von 0 bis 1 statt. Der Vorteil dieser Bestimmung besteht in einem deutlich verringerten Rechenaufwand unter Ermittlung einer echten Zufallszahl.

In einer weiteren Ausgestaltung des fernoptischen Geräts gemäß dem ersten Aspekt kann vorgesehen sein, dass die Modusselektionseinheit derart ausgebildet ist, dass die Parameter k und T abhängig von einem Modus, in dem die Bildstabilisierungseinrichtung angesteuert ist, festgesetzt und/oder abhängig von einem Anwendungsfall festgesetzt werden.

Entsprechend kann auch bei einem Verfahren gemäß dem zweiten Aspekt der Erfindung vorgesehen sein, dass die Parameter k und T abhängig von einem Modus, in dem die Bildstabilisierungseinrichtung angesteuert wird, festgesetzt und/oder abhängig von einem Anwendungsfall festgesetzt werden.

Somit ist es nicht zwingend, dass die Parameter T und k global für alle Modi gelten. Vielmehr können die Parameter T und k jeweils für jeden vorliegenden Modus individuell bestimmt und hinterlegt sein. Bei dem Beispiel von lediglich einem ersten Modus und einem zweiten Modus tritt so der Effekt auf, dass der Verlauf der Wahrscheinlichkeit für einen Wechsel in den ersten Modus ein anderer ist als der Verlauf der Wahrscheinlichkeit für den Verbleib in dem ersten Modus. So können insbesondere weichere Übergänge zwischen den einzelnen Modi hergestellt werden.

Darüber hinaus ist es des Weiteren möglich, dass die Parameter T und k außer von einem jeweiligen Modus zusätzlich noch von einem Anwendungsfall abhängen. Alternativ können sie auch lediglich von einem Anwendungsfall abhängen. Solche Anwendungsfälle können beispielsweise "stehende Position", "Fahrt mit einem Wasserfahrzeug", "Fahrt mit einem Landfahrzeug" usw. sein.

In einer Ausgestaltung des fernoptischen Geräts gemäß dem ersten Aspekt der Erfindung kann vorgesehen sein, dass das fernoptische Gerät eine Schnittstelleneinrichtung aufweist, die dazu ausgebildet ist, den Anwendungsfall einzustellen.

Entsprechend kann auch bei dem Verfahren gemäß dem zweiten Aspekt der Erfindung eine Ausgestaltung vorgesehen sein, dass das fernoptische Gerät eine Schnittstelleneinrichtung aufweist, mit der der Anwendungsfall eingestellt wird.

Auf diese Weise ist es für den Nutzer möglich, den Anwendungsfall einzustellen, entweder abhängig von dem tatsächlich vorliegenden Anwendungsfall oder anhand seiner persönlichen Vorlieben.

In einer weiteren Ausgestaltung des fernoptischen Geräts gemäß dem ersten Aspekt der Erfindung kann vorgesehen sein, dass das fernoptische Gerät des Weiteren eine Speichereinheit aufweist, in der mindestens ein Referenzprofil gespeichert ist, wobei einem jeweiligen Referenzprofil jeweils ein Anwendungsfall zugeordnet ist, und die Modusdetektionseinheit derart ausgebildet ist, dass sie anhand eines Vergleichs eines Verlaufs des Eingangssignals über einen bestimmten Zeitraum mit dem mindestens einen Referenzprofil den Anwendungsfall festsetzt.

Entsprechend kann auch bei dem Verfahren gemäß dem zweiten Aspekt der Erfindung in einer Ausgestaltung vorgesehen sein, dass mindestens ein gespeichertes Referenzprofil, wobei einem jeweiligen Referenzprofil jeweils ein Anwendungsfall zugeordnet ist, mit einem Verlauf des Eingangssignals über einen bestimmten Zeitraum verglichen wird und anhand des Vergleichs mit dem mindestens einen Referenzprofil der Anwendungsfall festgesetzt wird.

Dies ermöglicht eine automatische Auswahl des Anwendungsfalls, indem anhand des Verlaufs des Eingangssignals in einem Vergleich mit gespeicherten Referenzprofilen der Anwendungsfall ermittelt wird, dem der Verlauf des Eingangssignals am besten entspricht. Beispiel könnte etwa ein im Wesentlichen sinusförmiger Verlauf eines Eingangssignals auf Wellenbewegungen und damit auf den Anwendungsfall "Fahrt mit einem Wasserfahrzeug" hindeuten. In jedem Anwendungsfall sind dann die Parameter T und k für jeden Modus hinterlegt. Die manuelle Einstellung des Anwendungsfalls anhand der Schnittstelleneinrichtung kann zusätzlich möglich sein und gegebenenfalls Vorrang vor der automatischen Ermittlung des Anwendungsfalls haben.

Alternativ ist es darüber hinaus auch sowohl bei dem fernoptischen Gerät gemäß dem ersten Aspekt als auch bei dem Verfahren gemäß dem zweiten Aspekt denkbar, die freien Parameter T und k global oder separat für jeden Modus adaptiv an aktuelle Umgebungsbedingungen anzupassen, indem aus dem aktuell aufgenommenen Eingangssignal und dessen Mustern die Werte für die Parameter generiert werden.

In einer weiteren Ausgestaltung des fernoptischen Geräts gemäß dem ersten Aspekt der Erfindung kann vorgesehen sein, dass die Modusdetektionseinheit derart ausgebildet ist, dass sie den Anwendungsfalls kontinuierlich oder in regelmäßigen Zeitabständen festsetzt.

Entsprechend kann auch bei dem Verfahren gemäß dem zweiten Aspekt der Erfindung in einer Ausgestaltung vorgesehen sein, dass der Anwendungsfall kontinuierlich oder in regelmäßigen Zeitabständen festgesetzt wird.

Im Falle einer digitalen Signalverarbeitung ist dabei unter "kontinuierlich" zu verstehen, dass in jedem Takt eine Festsetzung des Anwendungsfalls erfolgt. Auf diese Weise wird stets der korrekte Anwendungsfall vorgehalten. Zur Verringerung des Rechenaufwands kann dies auch lediglich in bestimmten Zeitabständen erfolgen, beispielsweise alle zehn Sekunden, jede Minute usw.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:

Fig. 1    eine schematische Ansicht eines fernoptischen Geräts, seiner Achsen und entsprechender Bewegungsgrößen,

Fig. 2    eine schematische Seitenansicht einer Ausführungsform eines fernoptischen Geräts gemäß dem ersten Aspekt der Erfindung und der Komponenten einer Bildstabilisierung,

Fig. 3    einen schematischen beispielhaften Ablaufplan der Signalverarbeitung einer Bildstabilisierung bei dem fernoptischen Gerät in Fig. 2,

Fig. 4    beispielhafte Verlaufsdiagramme einer Wahrscheinlichkeit für das Vorliegen einer bestimmten Bewegungssituation,

Fig. 5    eine schematische Darstellung eines beispielhaften Verlaufs der Entscheidungen in einem fernoptischen Gerät bzw. einem Verfahren zur Bestimmung eines Modus,

Fig. 6    einen schematischen Ablaufplan einer Ausführungsform eines Verfahrens gemäß dem zweiten Aspekt der Erfindung,

Fig. 7    einen schematischen Unterablaufplan einer weiteren Ausführungsform des Verfahrens in Fig. 6,

Fig. 8a    ein Diagramm mit einem Beispiel einer Darstellung eines Verlaufs einer Wahrscheinlichkeit bei modusabhängig festgesetzten unterschiedlichen Parametern T und k, und

Fig. 8b    ein Diagramm mit einem Beispiel einer Darstellung eines Verlaufs einer Wahrscheinlichkeit bei abhängig von einem Anwendungsfall festgesetzten unterschiedlichen Parametern T und k.

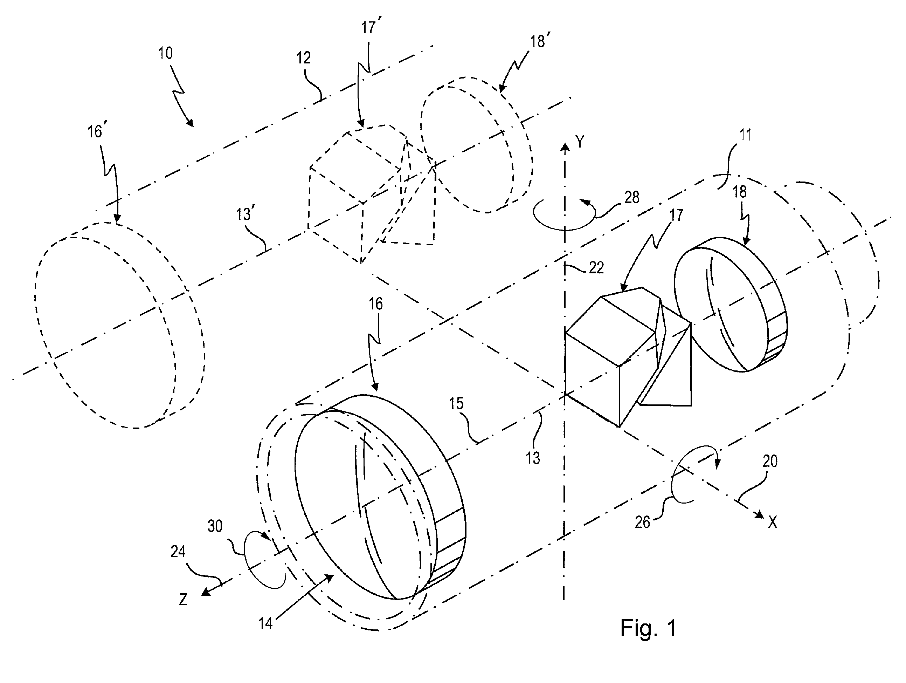

Die Fig. 1 zeigt eine schematische Darstellung eines fernoptischen Geräts 10 zunächst zur Erläuterung der Verhältnisse in einem bildstabilisierten fernoptischen Gerät 10.

Das dargestellte fernoptische Gerät 10 weist einen ersten Tubus 11 auf. Darüber hinaus kann das fernoptische Gerät einen zweiten Tubus 12 aufweisen, etwa im Fall eines binokularen Fernrohres. Die Verhältnisse werden im Folgenden beispielhaft an einem fernoptischen Gerät 10 mit lediglich einem ersten Tubus 11 erläutert, ohne dass dies jedoch einschränkend zu verstehen ist.

Der erste Tubus 11 erstreckt sich entlang einer Längsachse 13. In dem ersten Tubus 11 ist ein optisches System 14 vorgesehen, das sich entlang einer optischen Achse 15 erstreckt. In der dargestellten Ausrichtung fallen die optische Achse 15 und die Längsachse 13 zusammen. Im Rahmen einer Bildstabilisierung werden die optische Achse 15 und die Längsachse 13 jedoch relativ zueinander bewegt, um eine Bildstabilisierung zu bewirken. Das optische System 14 weist ein Objektiv 16, ein Umkehrsystem 17 und ein Okular 18 als optische Baugruppen auf. Darüber hinaus können noch weitere optische Elemente vorgesehen sein. Die Darstellung des Umkehrsystems 17 als prismatisches Umkehrsystem ist ebenfalls lediglich beispielhaft zu verstehen, es kann auch ein anderes Umkehrsystem, beispielsweise ein Linsenumkehrsystem, vorgesehen sein.

Eine Querachse 20 des fernoptischen Geräts 10 und eine Hochachse 22 des fernoptischen Geräts 10 bilden zusammen mit der Längsachse 13 ein kartesisches Koordinatensystem. Die Längsachse 13 bildet dabei stets eine dritte Achse 24 des Koordinatensystems, die auf der Hochachse 22 und der Querachse 20 senkrecht steht. Eine Bildstabilisierung kann grundsätzlich translatorische Bewegungen in Richtung jeder der drei Koordinatenachsen 20, 22, 24 bewirken. Darüber hinaus sind rotatorische Bewegungen möglich, nämlich eine Nickbewegung 26 um die Querachse 20, eine Gierbewegung 28 um die Hochachse 22 und eine Rollbewegung 30 um die z-Achse 24. In Bezug auf Zitterbewegungen bzw. Schwenkbewegungen sind dabei die Nickbewegung 26 und die Gierbewegung 28 am bedeutsamsten.

Die Bildstabilisierung wird dabei nachfolgend beispielhaft anhand eines fernoptischen Geräts 10 beschrieben, bei dem eine Bildstabilisierung anhand von Drehbewegungen des Winkelsystems 17 um die Querachse 20 und die Hochachse 22, nämlich zur Kompensation der Nickbewegung 26 und Gierbewegung 28 erfolgt. Dies ist jedoch ohne Einschränkung der Erfindung zu verstehen.

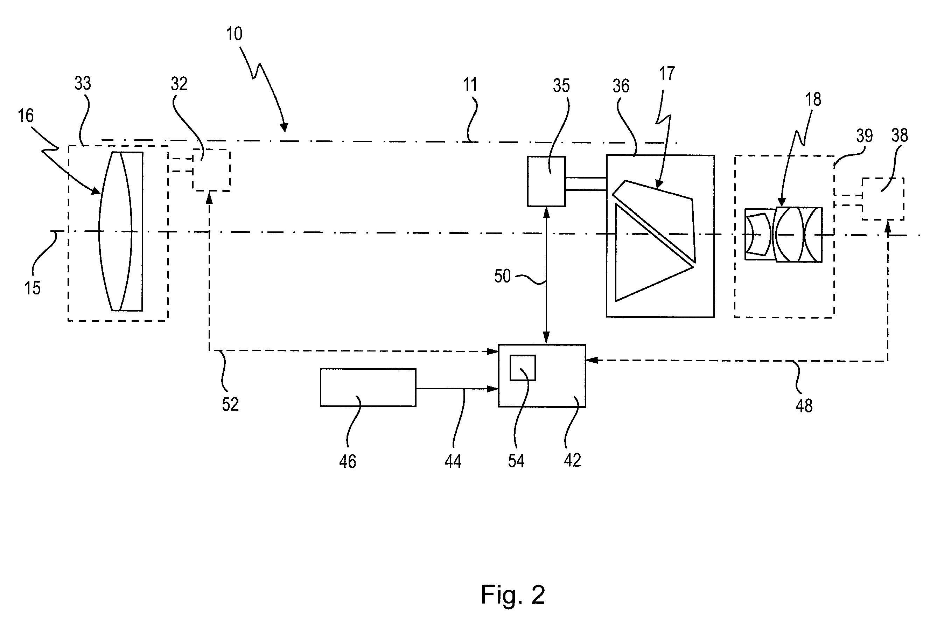

Die Fig. 2 zeigt in seitlicher Ansicht eine schematisch vereinfachte Darstellung des ersten Tubus 11 des fernoptischen Geräts 10. Eingezeichnet sind Aktuatoren 32 einer Bildstabilisierungseinrichtung 33 des Objektivs 16, Aktuatoren 35 einer Bildstabilisierungseinrichtung 36 des Umkehrsystems 17 und Aktuatoren 38 der Bildstabilisierungseinrichtung 39 des Okulars 18. Dabei ist lediglich die Bildstabilisierungseinrichtung 36 mit ihren Aktuatoren 35 in durchgezogenen Linien dargestellt. In dem geschilderten Ausführungsbeispiel erfolgt daher eine Bildstabilisierung lediglich durch ein Verkippen des Umkehrsystems 17 um die Hochachse 22 und um die Querachse 20. Grundsätzlich sind im Rahmen der vorliegenden Erfindung jedoch auch Bewegungen des Objektivs 16 und/oder des Okulars 18 möglich. Es sind auch Bildstabilisierungseinrichtungen bekannt, in denen beispielsweise sowohl das Umkehrsystem 17 als auch das Okular 18 gemeinsam, d.h. von einer einzigen Bildstabilisierungseinrichtung, bewegt werden. Das dargestellte Ausführungsbeispiel ist somit lediglich beispielhaft zu verstehen. Es muss lediglich mindestens eine der optischen Baugruppen 16, 17, 18 relativ zu dem Tubus 11 bewegbar sein.

Das fernoptische Gerät 10 weist des Weiteren eine Signalverarbeitungseinheit 42 auf, die die zentrale Signalverarbeitung in dem fernoptischen Gerät 10 leistet. Ein Eingangssignal 44 wird von mindestens einem Sensorelement 46 ermittelt und in die Signalverarbeitungseinheit 42 eingegeben.

Die Signalverarbeitungseinheit kommuniziert mittels einer entsprechenden Leitung 48, 50, 52 mit einer Regelungseinrichtung eines entsprechenden Aktuators 32, 35, 38 einer entsprechenden Bildstabilisierungseinrichtung 33, 36, 39.

Die Bildstabilisierung erfolgt dann durch eine Verkippung des Umkehrsystems 17 durch die Aktuatoren 35 der Bildstabilisierungseinrichtung 36. Auf diese Weise wird innerhalb des optischen Systems 14 das Zwischenbild so verschoben, dass eine Bewegung des ersten Tubus 11 kompensiert wird. Die Ansteuerung der Aktuatoren 35 erfolgt mittels der Signalverarbeitungseinheit 42. Entsprechend wird es dadurch möglich, das Umkehrsystem 17 beispielsweise um einen bestimmten Nickwinkel 26 relativ zu dem ersten Tubus 11 zu verkippen, so dass in diesem Fall eine Längsachse 13 des Tubus 11 und eine optische Achse 15 auseinanderfallen können. Die Darstellung in der Fig. 2 ist dabei, wie bereits voranstehend ausgeführt, lediglich beispielhaft zu verstehen. Es muss lediglich mindestens eine der optischen Baugruppen 16, 17, 18 relativ zu dem ersten Tubus 11 bewegbar sein, entsprechend ergeben sich dann auch andere Drehpunkte für die optische Achse 15. Entsprechend verhält es sich bei einer Kompensation von translatorischen Bewegungen mittels mindestens einer der optischen Baugruppen 16, 17, 18.

Um das Umkehrsystem 17 in der beispielhaften dargestellten Ausführungsform um sowohl die Hochachse 22 als auch die Querachse 20 verkippen zu können, wird es an einer zweiachsigen Kardanik (nicht dargestellt) aufgehängt, wobei die Achsen der Kardanik entsprechend orthogonal zueinander und senkrecht auf der Längsachse 13 stehen. Zur Ausführung der Kardanik sind dem Durchschnittsfachmann in erster Linie zwei Bauarten geläufig, zum einen kann jede Achse der Kardanik in zwei Kugellagern geführt werden oder aber es können Blattfederelemente als Festkörpergelenke zur Aufhängung des Umkehrsystems verwendet werden. Festkörpergelenke besitzen dabei die Vorteile einer höheren Positionsgenauigkeit, da sie ein geringeres mechanisches Spiel aufweisen, und günstigerer Produktionskosten.

Bei den Aktuatoren 32, 35, 38 handelt es sich in der Regel um linear bewegbare Aktuatoren. Diese sind in einem Abstand von der Längsachse 13 bzw. der optischen Achse 15 über einen Hebel angeordnet, so dass eine lineare Bewegung in eine Rotationsbewegung um die entsprechende Achse umgesetzt wird. Als Aktuatoren kommen vor allem drei Typen in Betracht, Voice-Coil-Motoren, Schrittmotoren und Piezo-Linearantriebe.

Bei der Verwendung von Voice-Coil-Motoren wird eine elektromagnetische Spule entweder am Umkehrsystem 17, in einem Zwischenring der Kardanik oder an dem ersten Tubus 11 bzw. einem Außenring der Kardanik befestigt. Die Schwenkbewegung erfolgt wiederum beispielhaft anhand einer vorgesehenen Bildstabilisierung um die Hochachse 22 und die Querachse 20. Bei entsprechend anders vorgesehenen Bildstabilisierungen für Rotations- oder Translationsbewegungen kann der Fachmann die entsprechenden Abwandlungen durchführen. Ein passender Permanentmagnet oder gegebenenfalls eine elektromagnetische Spule wird als Gegenpart an dem Zwischenring der Kardanik, dem ersten Tubus 11 bzw. dem Außenring oder dem Umkehrsystem 17 angebracht, so dass bei einem Beaufschlagen der Spule mit einem Strom eine magnetische Kraft zwischen den Komponenten wirkt, die das Umkehrsystem 17 um die entsprechenden Drehachse 20, 22 dreht. Da die Voice-Coil-Motoren keine Haltekraft besitzen, müssen die Kardangelenke vor einem Abschalten der Bildstabilisierung zusätzlich mechanisch arretiert werden. Dabei müssen für den Fall eines binokularen fernoptischen Geräts die Kardangelenke in einem arretierten Zustand in dem ersten Tubus 11 und dem zweiten Tubus 12 so zueinander fixiert sein, dass ein paralleler Strahldurchtritt gewährleistet ist, so dass ein Nutzer des fernoptischen Geräts 10 kein Doppelbild zwischen dem Bild des optischen Systems 14 des ersten Tubus 11 und dem Bild des optischen Systems 14' des zweiten Tubus 12 erhält, die sogenannte binokulare Justage.

Bei der Verwendung von Voice-Coil-Motoren existiert keine starre Kopplung zwischen der Spulenwicklung und dem verwendeten Permanentmagneten. Dabei können auch Konfigurationen des Kardangelenks gewählt werden, bei dem sich die Achsbewegungen gegenseitig beeinflussen. Dadurch können die Aktuatoren für beide Achsen z.B. an dem ersten Tubus 11 oder an dem äußeren Ring des Kardangelenks und der Permanentmagnet für die erste Achse auf dem Zwischenring und der zweite Permanentmagnet auf dem Prismensystem 17 selbst platziert werden. Dadurch brauchen keine bewegten Anschlussleitungen für die Aktuatoren verwendet werden.

Im Falle der Verwendung von Schrittmotoren treibt ein Schrittmotor zunächst eine Gewindespindel an. Von dieser Gewindespindel wird ein Mitnehmerelement angetrieben, der eine lineare Bewegung entlang der Spindel vollführt. Dieser wird über einen Hebel an das Umkehrsystem 17 angeschlossen, so dass die lineare Bewegung in eine Drehbewegung umgewandelt wird. Dazu wird ein Motor an dem ersten Tubus 11 bzw. an dem Außenring der Kardanik befestigt und treibt über einen Hebel den Innenring der Kardanik an. Der zweite Motor wird an den Innenring der Kardanik befestigt und treibt über einen Hebel das eigentliche Umkehrsystem 17 an. Durch diese Anordnung besteht keine gegenseitige Beeinflussung der beiden Achsen. Die Verwendung von Schrittmotoren mit Spindelantrieb hat den Vorteil, dass sehr große Haltekräfte und große Antriebskräfte bereitgestellt werden können. Dadurch können auch Umkehrsysteme 17 für große fernoptische Geräte 10 effizient bewegt werden und es kann auf eine zusätzliche Arretierung des Umkehrsystems 17 verzichtet werden. Außerdem sind Schrittmotoren als Standardbauteile sehr kostengünstig.

Bei der Verwendung eines Piezo-Linearantriebs wird eine schwingende Piezokeramik in Verbindung mit einem Reibelement als Gegenpart verwendet. Durch Hin- und Herschwingen der Piezokeramik in unterschiedlichen Arten wird das gegenüberliegende Reibelement bewegt. Die Kopplung zwischen Piezokeramik und Reibelement erfolgt dabei über Reib- und Auflagekräfte. Da diese Kopplung nicht starr ausgebildet ist, kann der Reibpunkt auch senkrecht zur Bewegungsrichtung verschoben werden, so dass auch Anordnungen zwischen zwei Aktuatoren möglich sind, die nicht orthogonal zueinander sind oder die sich gegenseitig beeinflussen. Daher können beide Aktuatoren für einen ersten Tubus 11 an dem ersten Tubus 11 bzw. an dem Außenring der Kardanik befestigt werden. Das Reibelement des einen Aktuators befindet sich dann auf dem Innenring und treibt dadurch die eine Achse an, das Reibelement des anderen Aktuators befindet sich dann auf dem Umkehrsystem 17 und treibt die andere Achse an. Dieser Aufbau vereinfacht die Konstruktion insoweit, als dass keiner der Aktuatoren selbst sich auf einem bewegten Teil befindet. Dies verringert Kontaktierungsprobleme, da keine bewegten Leitungen verwendet werden müssen. Außerdem wird das Gewicht des Innenrings verringert, auf dem andernfalls zusätzlich der zweite Aktuator sitzen würde. Ein Piezo-Aktuator verfügt über eine hohe Einstellgenauigkeit bei gleichzeitig einer hohen Geschwindigkeit, was die Qualität der Stabilisierung erhöht. Er verfügt weiterhin über eine große Selbsthemmung, so dass auf eine zusätzliche Arretierung verzichtet werden kann. Weiterhin ist ein Piezo-Linearantrieb sehr effizient, so dass der Stromverbrauch gering ist und lange Batterielaufzeiten des fernoptischen Geräts 10 erreicht werden können.

Die Stellung des Kardangelenks wird mit einem Hall-Sensor für jede Achse überwacht. Dieser ist ähnlich der Aktuatorik beabstandet von der entsprechenden Schwenkachse, so dass eine Veränderung des Drehwinkels in eine lineare Bewegung umgesetzt wird, die vom Hall-Sensor gemessen wird und von einer Regelungseinrichtung der Aktuatorik 32, 35, 38 eingelesen werden kann.

Mittels des mindestens einen Sensorelements 46 werden die jeweiligen Winkelgeschwindigkeiten um die Hochachse 22 bzw. die Querachse 20 erfasst. Aus den entsprechenden Messsignalen 47 berechnet die Signalverarbeitungseinheit 42 einen Soll-Kippwinkel zur Ansteuerung der Aktuatoren 35 der Bildstabilisierungseinrichtung 36 und übermittelt diese über die Leitung 50. Die Regelungseinrichtung des Aktuators 35 verwendet diesen Soll-Kippwinkel als Zielwert eines Regelkreises, der mittels eines für eine entsprechende Drehbewegung des Umkehrsystems 17 vorgesehenen Aktuators und eines entsprechenden Hall-Sensors das Umkehrsystem 17 auf diesen Soll-Kippwinkel bewegt und dort hält. Dabei handelt es sich um einen Regelkreis, mit dem durch Vergleich des Signals aus dem entsprechenden Hall-Sensor und dem entsprechenden berechneten Soll-Kippwinkel die Geschwindigkeit eines entsprechenden Aktuators gesteuert wird.

Gemäß der voranstehend beschriebenen Ausführungsform befindet sich eine entsprechende Regeleinrichtung in bzw. an dem Aktuator 35, d.h. dies ist Teil der Bildstabilisierungseinrichtung 36. Grundsätzlich kann auch vorgesehen sein, dass eine entsprechende Regelungseinrichtung ein Element der Signalverarbeitungseinheit 42 ist, entsprechend würden sich dann die über die Leitung 50 übertragenen Signale ändern, beispielsweise wäre das Signal der Hall-Sensoren an die Signalverarbeitungseinheit 42 zu übertragen.

Grundsätzlich kann vorgesehen sein, das fernoptische Gerät 10 in einem Montageschritt einer Kalibrierung zu unterziehen, bei der jeder nominal über den Regelkreis eingestellten Verkippung des Umkehrsystems 17 die reale Bildauslenkung zugeordnet und in dem fernoptischen Gerät 10 hinterlegt wird. Durch diese Kalibrierung kann die Genauigkeit der Bildstabilisierung erhöht werden, da mechanische Toleranzen ausgeglichen werden. In dem Fall, dass das fernoptische Gerät 10 ein binokulares fernoptisches Gerät ist, kann das fernoptische Gerät 10 hier binokular justiert werden. Im Falle eines binokularen fernoptischen Geräts, bei dem entweder eine Signalverarbeitungseinheit 42 für sowohl den ersten Tubus 11 als auch den zweiten Tubus 12 vorgesehen ist bzw. sowohl der erste Tubus 11 als auch der zweite Tubus 12 jeweils eine Signalverarbeitungseinheit 42 aufweisen, die jedoch miteinander kommunizieren können, kann darüber hinaus ein Parallaxenausgleich stattfinden. Wenn die Entfernung eines beobachteten Objektes bekannt ist, beispielsweise über die Stellung einer Fokussierungseinrichtung des fernoptischen Geräts 10, kann die Parallaxe berechnet und durch eine entsprechende Stellung der Umkehrsysteme 17, 17' zueinander kompensiert werden.

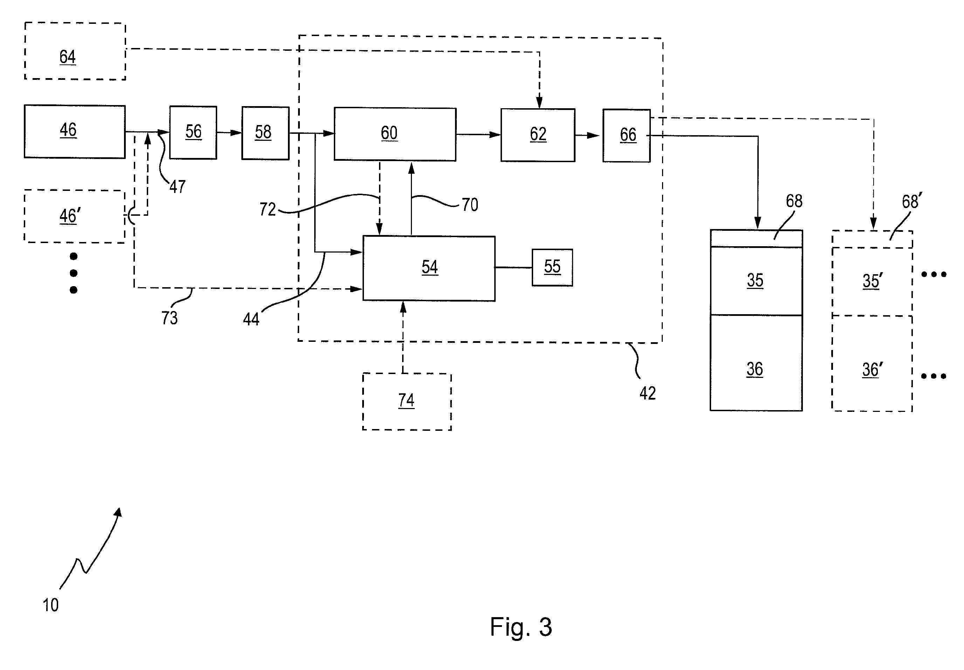

Die Fig. 3 zeigt noch einmal einen beispielhaften Aufbau der Signalverläufe in dem fernoptischen Gerät 10 in einem Blockschaltbild. Mindestens ein Sensorelement 46 ermittelt ein Messsignal 47. Grundsätzlich kann mehr als ein Sensorelement 46 vorgesehen sein, so dass weitere Sensorelemente 46' weitere Messsignale 47' liefern.

Die Messsignale 47 werden in die Eingangssignale 44 gewandelt, was im Folgenden noch beschrieben wird, und werden dann an in eine Modusdetektionseinheit 54 eingespeist. Die Modusdetektionseinheit 54 dient dabei dazu, zwischen verschiedenen Modi zur Ansteuerung zu unterscheiden und einen Modus zur Ansteuerung festzusetzen. In einer Speichereinheit 55 können Referenzprofile abgespeichert sein, deren Verwendung im Folgenden noch erläutert wird. Die Modusdetektionseinheit 54 kann die Referenzprofile aus der Speichereinheit 55 auslesen.

Zur Filterung des Messsignals 44 können Signalfilter 56 vorgesehen sein. Die Signalfilter 56 können einen oder mehrere Tiefpassfilter enthalten, um hochfrequente Bewegungen, die nicht kompensiert werden müssen, und den hochfrequenten Teil eines Rauschens des Messsignals 47 zu eliminieren. Dazu kann eine Kombination aus einem elektrischen bzw. passiven Tiefpassfilter, einem digitalen Tiefpassfilter und einem digitalen Shelving-Filter in Reihe verwendet werden. Die jeweiligen Filtertypen sind dem Durchschnittsfachmann grundsätzlich bekannt. In dieser Kombination tritt eine Signalverzögerung von lediglich 45° auf. Eine geringere Verzögerung des Messsignals 47 ist notwendig, um eine Bildstabilisierung in Echtzeit zu ermöglichen. Die Tiefpassfilter der Signalfilter 56 erfüllen dabei die Aufgabe, unerwünschtes Rauschen und Störungen zu minimieren als auch eine obere Grenzfrequenz der Bildstabilisierung zu bestimmen. Über die beschriebenen Signalfilter 56 und einen Analog-zu-Digital Konverter 58 werden dann die Eingangssignale 44 an die Signalverarbeitungseinheit 42, insbesondere die Modusdetektionseinheit 54 und eine Hochpassfilter-Integratoreinheit 60 eingespeist.

Die Modusdetektionseinheit 54 kann auf die Hochpassfilter-Integratoreinheit 60 einwirken, um so die Ansteuerung in jedem Modus zu beeinflussen. Zumindest gibt die Modusdetektionseinheit 54 den aktuellen Modus an die Hochpassfilter-Integratoreinheit 60 aus.

In der beispielhaft ausgeführten Ausführungsform handelt es sich bei den Eingangssignalen 44 um Winkelgeschwindigkeiten, so dass das integrierte Signal ein Winkel ist. Dieser wird von der Integratoreinheit 44 an eine Koordinatentransformationseinheit 62 weitergegeben, die den Winkel von dem Koordinatensystem der Sensorelemente 46, 46' in das Koordinatensystem der Bildstabilisierungseinrichtung 36, 36' umsetzt. Im Falle eines binokularen fernoptischen Geräts 10, bei dem der erste Tubus 11 und der zweite Tubus 12 mittels einer Knickbrücke verbunden sind, ist des Weiteren ein Knickbrückensensor 64 vorgesehen, der einen Knickbrückenwinkel ermittelt und an die in der Signalverarbeitungseinheit 42 vorgesehene Koordinatentransformationseinheit 62 übermittelt, so dass bei der Koordinatentransformation auch der Knickbrückenwinkel berücksichtigt wird. Grundsätzlich kann die Koordinatentransformationseinheit 62 auch im Signalfluss vor der Integratoreinheit 44 angeordnet sein.

Des Weiteren ist schematisch eine Sollsignalerzeugungseinheit 66 dargestellt, diese kann die integrierten Soll-Winkelsignale insbesondere wieder in analoge Signale wandeln und gibt dann an eine entsprechende Bildstabilisierungseinrichtung 36, 36' das passende Soll-Winkelsignal aus. Dazu kommuniziert die Signalverarbeitungseinheit 42 mit einer entsprechenden Regelungseinrichtung 68, 68' der Bildstabilisierungseinrichtung 36, 36', die die entsprechenden Aktuatoren 35, 35' regelt. Es kann auch vorgesehen sein, dass die Regelungseinrichtungen 68, 68' ebenfalls in der Signalverarbeitungseinheit 42 vorgesehen sind, in diesem Fall fließen von den Bildstabilisierungseinrichtungen 36, 36' entsprechende Positionsdaten, die wie voranstehend erläutert durch Hall-Sensoren ermittelt werden, zurück an die Signalverarbeitungseinheit 42.

Die Modusdetektionseinheit 54 ist mit der Hochpassfilter-Integratoreinheit 60 verbunden und kann mit dieser kommunizieren. Dabei wird über eine Signalleitung 70 insbesondere der von der Modusdetektionseinheit 54 bestimmte Modus an die Hochpassfilter-Integratoreinheit 60 weitergegeben, um eine Ansteuerung der Bildstabilisierungseinrichtungen 36, 36' in einem bestimmten Modus erfolgen zu lassen. Welcher Art die mittels der Signalleitung 70 übertragenen Daten sind, kann unterschiedlich ausgeführt sein. Es kann beispielsweise nur der Modus übermittelt werden, es kann aber auch vorgesehen sein, dass bereits bestimmte, in der Hochpassfilter-Integratoreinheit 60 vorgesehene beeinflussbare Größen bzw. Parameter übermittelt werden. Des Weiteren kann vorgesehen sein, dass auch die Hochpassfilter-Integratoreinheit 60 Signale an die Modusdetektionseinheit 54 mittels einer Signalleitung 72 übertragen kann. Dies kann beispielsweise der gegenwärtig in der Hochpassfilter-Integratoreinheit 60 angewendete Modus sein. Darüber hinaus kann beispielsweise in dem Fall, dass das Messsignal 47 bzw. das Eingangssignal 44 eine Beschleunigung bzw. Winkelbeschleunigung ist, ein einmal zu einer Geschwindigkeit bzw. Winkelgeschwindigkeit integriertes Signal an die Modusdetektionseinheit 54 übermittelt werden. So kann auch in dem Fall, dass das Messsignal 47 bzw. das Eingangssignal 44 eine Beschleunigung bzw. eine Winkelbeschleunigung ist, eine Bestimmung des Modus bzw. einer Bewegungssituation anhand eines Geschwindigkeitssignals bzw. Winkelgeschwindigkeitssignals erfolgen.

Grundsätzlich ist vorgesehen, dass die Bestimmung der Bewegungssituation und damit des Modus anhand des Eingangssignals 44 erfolgt, das bereits den Signalfilter 56 und den Analog-zu-Digital-Konverter 58 durchlaufen hat. Es kann in einer Ausgestaltung aber auch vorgesehen sein, dass mittels einer Signalleitung 73 das ungefilterte Messsignal 47 verwendet wird. In der Signalleitung 73 kann auch ein Analog-zu-Digital-Konverter (nicht dargestellt) angeordnet sein, um das Signal entsprechend umzusetzen.

Des Weiteren kann eine Schnittstelleneinrichtung 74 vorgesehen sein. Bei der Schnittstelleneinrichtung 74 kann es sich etwa um einen mechanischen Stellhebel bzw. ein mechanisches Stellelement handeln, es kann aber auch eine softwarebasierte Eingabemöglichkeit, beispielsweise mittels eines Touchscreens vorgesehen sein. Mittels der Schnittstelleneinrichtung 74 kann ein Nutzer einen gewünschten Anwendungsfall in die Signalverarbeitungseinheit 42 eingeben. Auf verschiedene Anwendungsfälle und ihre Bedeutung für die Bestimmung eines Modus zur Ansteuerung wird noch eingegangen.

In einer Ausführungsform kann vorgesehen sein, dass eine Eingabe mittels der Schnittstelleneinrichtung 74 Vorrang vor einem mittels der Modusdetektionseinheit 54 ermittelten Anwendungsfall hat.

Insbesondere ist die Modusdetektionseinheit 54 dazu in der Lage, zwischen einem Bildstabilisierungsmodus und einem Schwenkmodus zu unterscheiden. Dieses geschieht anhand einer Auswertung des Eingangssignals 44. Als Alternative wäre auch denkbar, direkt das Messsignal 47 über eine Leitung 73 in die Modusdetektionseinheit 54 einzugeben und die Auswertung anhand des Messsignals 47 durchzuführen. Insbesondere erfolgt eine wahrscheinlichkeitsbasierte Bestimmung des Schwenkmodus wie im Folgenden noch beschrieben wird. Die Bestimmung eines Schwenkmodus kann unabhängig für die Hochachse und für die Querachse erfolgen, d.h. unabhängig für jedes Messsignal 47, 47', aus denen sich das Eingangssignal 44 zusammensetzt. In der schematischen Darstellung sind die Messsignale 47, 47' serieller Art auf einem Bus dargestellt, grundsätzlich ist auch eine parallele Verarbeitung möglich. Im Folgenden wird nunmehr genauer auf die Funktionsweise der Modusdetektionseinheit 54 eingegangen.

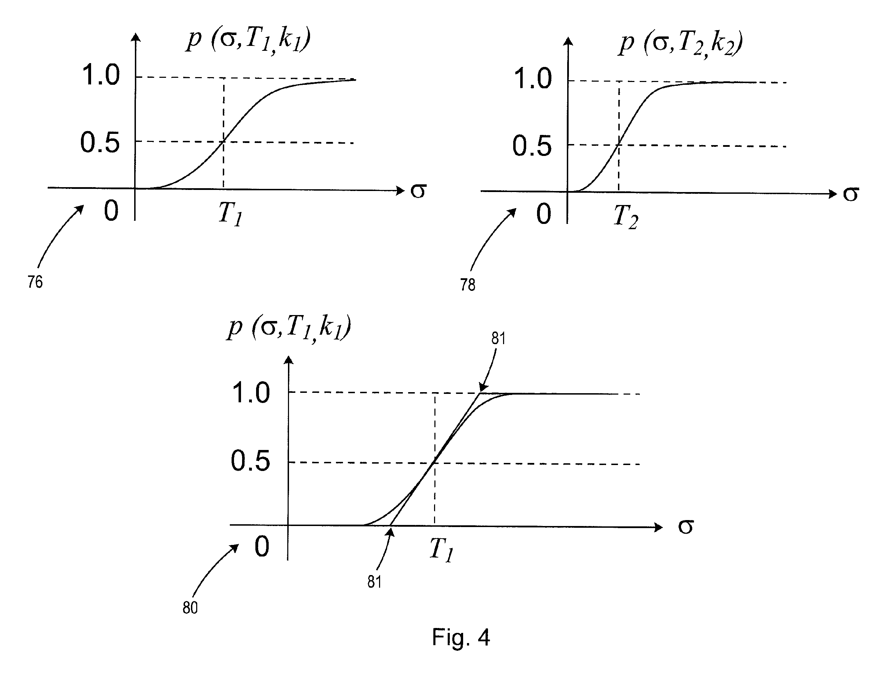

Fig. 4 zeigt mehrere Beispiele für die Verläufe der Wahrscheinlichkeitsfunktion $p(\sigma, T, k)$ in Abhängigkeit von einem integrierten Eingangssignal $\sigma$ und für bestimmte Parameter T und k. In einem ersten Diagramm 76 ist der Verlauf von p über $\sigma$ für zwei bestimmte Parameter $T_1$ und $k_1$ aufgetragen. Der Verlauf berechnet sich dabei nach der Formel

$$p(\sigma, T, k) = \frac{1}{1 + e^{-k(\sigma - T)}}$$

Aufgrund der Formel ergibt sich ein Wertebereich zwischen 0 und 1. Der Parameter $T_1$ bestimmt dabei die Schwelle der Funktion, d.h. denjenigen Wert für $\sigma$, bei dem der Wert 0,5 bzw. die Wahrscheinlichkeit 50 % beträgt. Der Parameter $k_1$ bestimmt die Steigung der Funktion in dem Punkt $T_1$.

Zum Vergleich ist in einem Diagramm 78 der Verlauf der Funktion p für zwei andere Parameter $T_2$ und $k_2$ aufgetragen. Dabei gilt $T_2 < T_1$ und $k_2 > k_1$. Entsprechend ist zu erkennen, dass die Schwelle bereits für einen geringeren Wert von $\sigma$ erreicht wird und dass die Steigung in diesem Punkt größer ist. Entsprechend wird auch für einen kleineren Wert von $\sigma$ bereits eine relativ hohe Wahrscheinlichkeit nahe 1,0 erreicht.

In einem Diagramm 80 ist der Verlauf der Wahrscheinlichkeit einer anhand der Formel

$$p(\sigma, T, k) = \begin{cases} 0 \; f\ddot{u}r \, \sigma < T - k \\ \dfrac{\sigma - (T - k)}{2 \cdot k} \; f\ddot{u}r \, T - k \leq \sigma \leq T + k \\ 1 \; f\ddot{u}r \, \sigma > T + k \end{cases}$$

linearisierten Funktion angegeben. Auch bei der linearisierten Funktion gibt der Parameter T die Schwelle der Funktion p und der Parameter k die Steigung der Funktion p in dem Punkt T an. Aufgrund der Linearisierung weist die Funktion jedoch Diskontinuitäten 81 auf. Des Weiteren nimmt die linearisierte Funktion für einen Bereich kleiner T-k den genauen Wert 0 und für einen Bereich größer T+k genau den Wert 1 an. Die so linearisierte Funktion weicht jedoch nur marginal von dem Verlauf der exakten Funktion ab. Insbesondere für große Werte für den Parameter k sind die Abweichungen sehr gering.

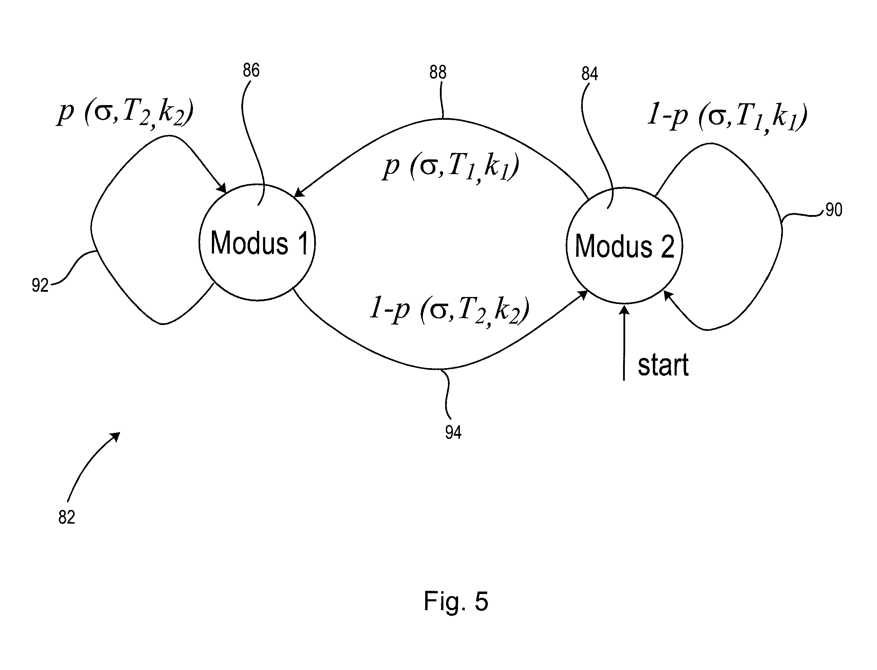

Fig. 5 zeigt ein Ablaufschema 82, das den Verlauf der Entscheidungen anhand eines Ausführungsbeispiels mit zwei verschiedenen Modi darlegt. Zu Beginn der Bildstabilisierung ist als Anfangsbedingung festgelegt, dass die Bildstabilisierung in einem zweiten Modus 84 erfolgt, dem die Bewegungssituation "ungewollte Bewegung" bzw. "Zitterdrehbewegung" zugeordnet ist. Der Einfachheit halber wird angenommen, dass an diesem Ausführungsbeispiel keine weitere Unterscheidung zwischen verschiedenen Anwendungsfällen vorgenommen wird, bzw. dass während des gesamten Zeitraums derselbe Anwendungsfall gilt. Befindet sich die Bildstabilisierung nach dem Start daher in dem zweiten Modus 84, gelten die Parameter $T_1$ und $k_1$ zur Bestimmung einer Wahrscheinlichkeit für das Vorliegen eines ersten Modus 86. Die Eingangssignale 44 werden über einen bestimmten Zeitraum integriert und so $\sigma$ bestimmt. Daraus ergibt sich so die Wahrscheinlichkeit $p(\sigma,T_1,k_1)$ für einen mit dem Bezugszeichen 88 gekennzeichneten Wechsel in den ersten Modus 86. Daraus ergibt sich entsprechend eine mit dem Bezugszeichen 90 gekennzeichnet Wahrscheinlichkeit $1-p(\sigma,T_1,k_1)$ für ein Verbleiben in dem zweiten Modus 84.

Wird ein Wechsel 88 in den ersten Modus 86 bewirkt, da ein Vergleich einer Zufallszahl mit der ermittelten Wahrscheinlichkeit $p(\sigma,T_1,k_1)$ eine wahre Aussage ergeben und somit den Wechsel 88 bewirkt hat, gelten in dem ersten Modus 86 nun die Parameter $T_2$ und $k_2$. Der Verlauf der Wahrscheinlichkeitsfunktion $p(\sigma,T_2,k_2)$ ist nunmehr ein anderer, beispielsweise wie dies in der Fig. 4 dargestellt ist.

Die Wahrscheinlichkeit wird nun gemäß der Formel $p(\sigma,T_2,k_2)$ ermittelt und mit der Zufallszahl verglichen. Entsprechend bewirkt eine wahre Aussage bezüglich des Vorliegens des ersten Modus 86 dann ein Verbleiben in dem ersten Modus 86, was mit einem Bezugszeichen 92 gekennzeichnet ist. Entsprechend gilt dann eine Wahrscheinlichkeit $1-p(\sigma,T_2,k_2)$ für ein Wechsel zurück in den zweiten Modus 84, was mit einem Bezugszeichen 94 gekennzeichnet ist.

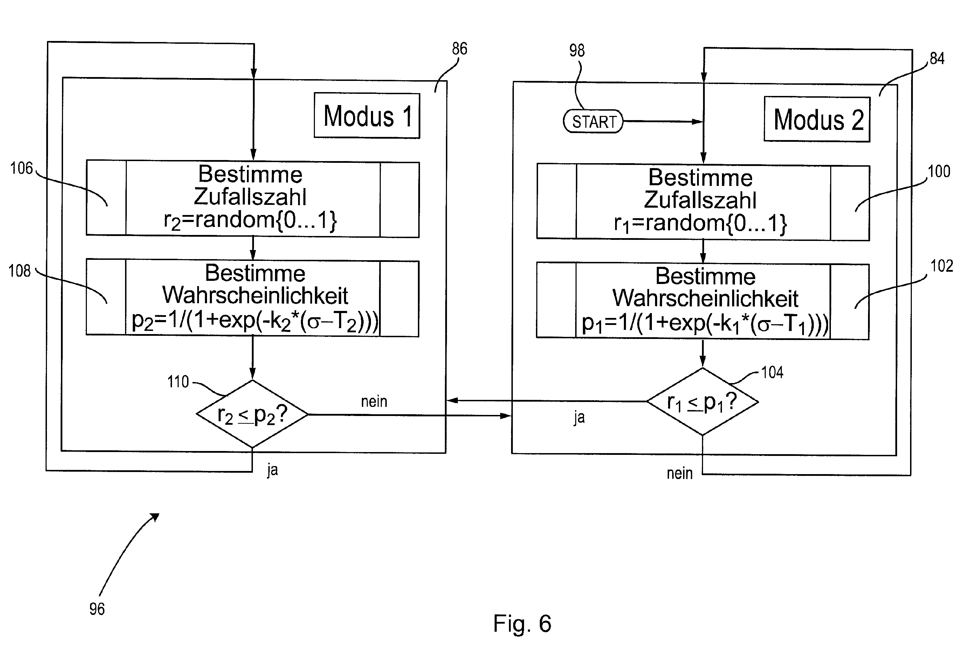

Die Fig. 6 zeigt einen schematischen Ablaufplan für eine Ausführungsform eines Verfahrens 96. Das Verfahren beginnt in einem Startschritt 98, somit ist vorgegeben, dass der zweite Modus 84 bei einem Beginn des Verfahrens 96 vorliegt. Zunächst wird nun eine Zufallszahl $r_1$ in einem Schritt 100 bestimmt. Dabei kann ein entsprechender Algorithmus vorgesehen sein, der eine entsprechende Pseudozufallszahl in einem Bereich von 0 bis 1 erzeugt, es kann aber auch beispielsweise aus einem Rauschen eines Sensorsignals 47 eines Sensorelements 46 des fernoptischen Geräts 10 eine echte Zufallszahl in einem Bereich von 0 bis 1 erzeugt werden.

In einem Schritt 102 wird dann wie voranstehend beschrieben die Wahrscheinlichkeit $p_1$ für das Vorliegen des ersten Modus 86 ermittelt. Grundsätzlich müssen die Schritte 100 und 102 nicht in der dargestellten Reihenfolge ausgeführt werden, sie können auch in umgekehrter Reihenfolge erfolgen.

In einem Schritt 104 wird nun ermittelt, ob die Zufallszahl $r_1$ kleiner oder gleich der Wahrscheinlichkeit $p_1$ ist und auf diese Weise eine binäre Entscheidung über das Vorliegen der dem Modus 86 zugeordneten Bewegungssituation getroffen. Ist dies nicht der Fall, verbleibt die Signalverarbeitungseinrichtung 42 in dem zweiten Modus 84 zur Ansteuerung der Bildstabilisierungsseinrichtung 36, 36'. Ist dies der Fall, wechselt die Signalverarbeitungseinrichtung 42 in den ersten Modus 86 zur Ansteuerung der Bildstabilisierungsseinrichtung 36, 36'.

In dem erstem Modus 86 gelten nun andere Parameter $k_2$ und $T_2$. In dem ersten Modus 86 wird entsprechend ebenfalls eine Zufallszahl $r_2$ in einem Schritt 106 bestimmt. Darauffolgend wird die Wahrscheinlichkeit $p_2$ mit den Parametern $k_2$ und $T_2$ in einem Schritt 108 bestimmt. Auch hier können die Schritte 106 und 108 grundsätzlich auch in umgekehrter Reihenfolge erfolgen. In einem Schritt 110 wird dann abgefragt, ob die Zufallszahl $r_2$ kleiner oder gleich der Wahrscheinlichkeit $p_2$ ist. Ist dies der Fall, verbleibt die Signalverarbeitungseinrichtung 42 in dem ersten Modus 86. Ist dies nicht der Fall, wechselt die Signalverarbeitungseinrichtung 42 zurück in den zweiten Modus 84, da die dem ersten Modus 86 zugeordnete Bewegungssituation nicht mehr vorliegt, sondern die dem zweiten Modus 84 zugeordnete Bewegungssituation.

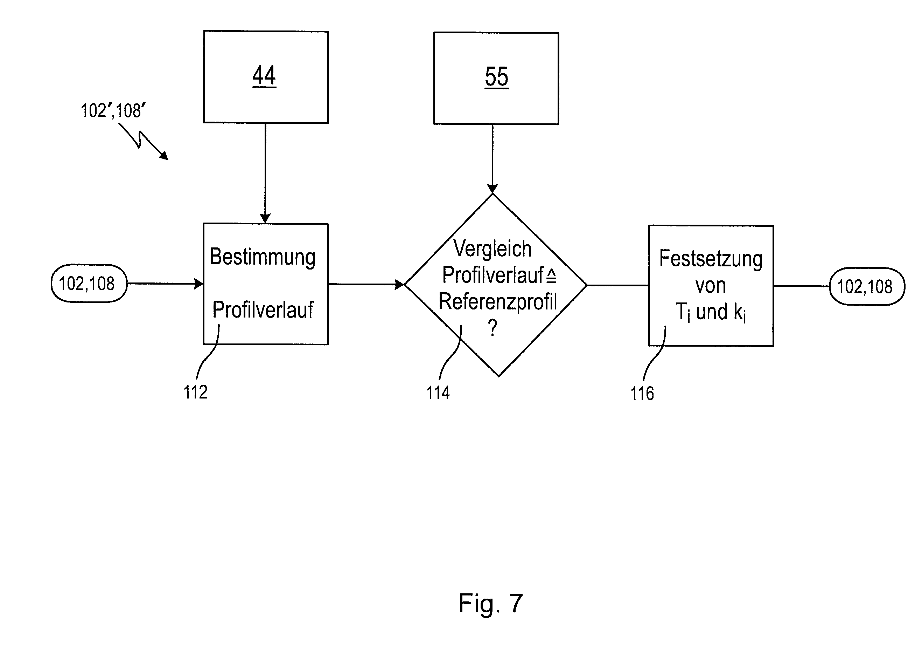

Fig. 7 zeigt eine Ausführungsform des Verfahrens in Fig. 6, bei dem der Schritt der Bestimmung der Wahrscheinlichkeiten $p_1$ 102' bzw. $p_2$ 108' abgewandelt ist. Dabei sind die Parameter $T_1$, $k_1$ bzw. $T_2$, $k_2$ zusätzlich noch von einem jeweiligen Anwendungsfall abhängig und variieren von Anwendungsfall zu Anwendungsfall. Um diesen Anwendungsfall zu ermitteln, wird zunächst innerhalb des jeweiligen Schritts 102', 108' in einem Schritt 112 anhand des Eingangssignals 44 dessen Profilverlauf bestimmt. Insbesondere kann der Profilverlauf durch eine Analyse der Bewegungsmuster in Form eines Spektrums bzw. Frequenzspektrums bestimmt werden. In einem Schritt 114 wird dieser Profilverlauf dann mit mindestens einem Referenzprofil bzw. Referenzspektrum verglichen, das in einer Speichereinheit 55 der Signalverarbeitungseinheit 42 abgelegt ist. Beispielsweise kann hierbei ein Wert der Fehlerquadrate zwischen Profilverlauf und einem jeweiligen Referenzprofil bestimmt werden und dann ein jeweiliges Referenzprofil als zu dem Profilverlauf passend erkannt werden, wenn die Summe der Fehlerquadrate unter einem bestimmten Grenzwert liegt. Es kann auch immer das Referenzprofil als passend zugeordnet werden, das die geringste Summe der Fehlerquadrate im Vergleich mit dem Profilverlauf ergibt.

Das bekannte Referenzprofil ist einem jeweiligen Anwendungsfall zugeordnet, für den dann die Parameter $T_1$ und $k_1$ bzw. $T_2$ und $k_2$ bzw. im Fall von noch mehr Modi auch weitere Parameter Ti und $k_1$ hinterlegt sind. In einem Schritt 116 werden diese Parameter dann entsprechend für den vorliegenden Anwendungsfall ausgelesen und festgesetzt und die Schritte 102' bzw. 108' mit der Bestimmung der Wahrscheinlichkeit $p_1$ bzw. $p_2$ fortgesetzt.

Des Weiteren kann vorgesehen sein, dass ein Nutzer des fernoptischen Geräts 10 den Anwendungsfall mittels der Schnittstelleneinrichtung 74 vorgibt. Insbesondere kann diese manuelle Vorgabe des Anwendungsfalls durch den Nutzer Priorität vor der in Fig. 7 dargestellten automatischen Erkennung haben. Die Vorgabe des Anwendungsfalls mittels der Schnittstelleneinrichtung 74 hat dann Vorrang vor der automatischen Ermittlung durch die Modusdetektionseinheit 54.

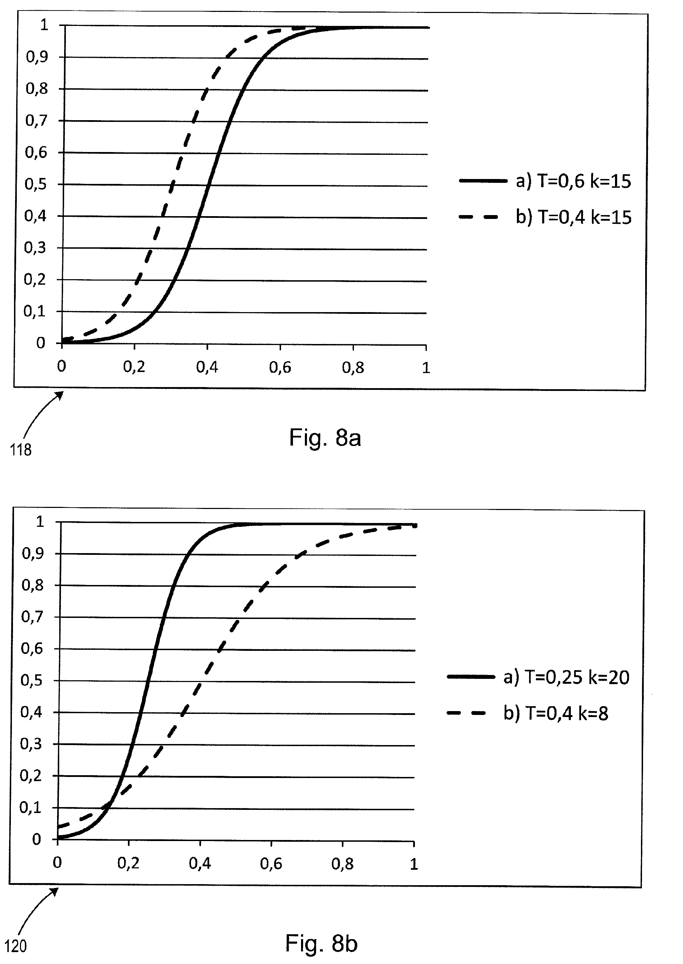

Die Fig. 8a zeigt ein Diagramm 118 mit einem Beispiel einer Darstellung eines Verlaufs einer Wahrscheinlichkeit bei modusabhängig festgesetzten unterschiedlichen Parametern T und k. Das Eingangssignal ist auf einen Bereich von 0 bis 1 auf der horizontalen Achse skaliert, auf der vertikalen Achse ist die Wahrscheinlichkeit aufgetragen. Die unter a) angegebenen Werte für die Parameter T und k können dabei beispielsweise in dem zweiten Modus 84 gelten. Die unter b) angegebenen Werte für die Parameter T und k können dabei beispielsweise in dem ersten Modus 86 gelten. Der Parameter T ist dann in dem ersten Modus 86 kleiner gewählt als in dem zweiten Modus 84, da bei schon vorhandener gewollter Bewegung in der Regel eine höhere Wahrscheinlichkeit für eine weitere gewollte Bewegung besteht. Auf diese Weise wird eine Hysterese bei einem Wechsel zwischen dem ersten Modus 86 und dem zweiten Modus 84 eingeführt.

Die Fig. 8b zeigt ein Diagramm 120 mit einem Beispiel einer Darstellung eines Verlaufs einer Wahrscheinlichkeit bei abhängig von einem Anwendungsfall festgesetzten unterschiedlichen Parametern T und k. Das Eingangssignal ist auf einen Bereich von 0 bis 1 auf der horizontalen Achse skaliert, auf der vertikalen Achse ist die Wahrscheinlichkeit aufgetragen. Die angegebenen Werte gelten dabei für einen Wechsel von dem zweiten Modus 84 in den ersten Modus 86. Für den umgekehrten Wechsel wären die Werte für den Parameter T entsprechend zu der Darstellung in der Fig. 8a geringer zu wählen, um die dort beschriebene Hysterese zu erhalten.

Die unter a) angegebenen Werte können beispielsweise für einen Anwendungsfall "ruhiger Untergrund" gelten, z.B. auf festem Boden. Der Paramter T ist für diesen Anwendungsfall relativ klein festgesetzt, der Paramter k ist relativ groß festgesetzt, da eine über das normale Zittern hinausgehende Bewegung mit hoher Wahrscheinlichkeit eine gewollte Bewegung ist. Die unter b) angegebenen Werte können beispielsweise für einen Anwendungsfall "bewegter Untergrund" gelten, z.B. in einem bewegten Fahrzeug. Der Parameter T ist für diesen Anwendungsfall in einem mittleren Bereich festgesetzt, der Parameter k ist relativ klein festgesetzt, da der ein Übergang zwischen einer gewollten und einer ungewollten Bewegung in diesem Anwendungsfall fließend ist. Dies wird durch eine entsprechend "weiche" Kurve abgebildet.

Die unter a) und b) angegebenen Werte können auch bei einem manuell eingestellten Anwendungsfall oder einem automatisch ermittelten Anwendungsfall gelten. So kann beispielsweise den unter a) angegebenen Werten ein manuell einstellbares bzw. automatisch erkennbares Benutzerprofil "ruhiger Benutzertyp" und den unter b) angegebenen Werten ein manuell einstellbares bzw. automatisch erkennbares Benutzerprofil "unruhiger Benutzertyp" zugeordnet werden.

**Patentansprüche**

1. Fernoptisches Gerät (10) mit mindestens einem Tubus (11, 12), in dem ein optisches System (14) angeordnet ist, mit mindestens einer Bildstabilisierungseinrichtung (33, 36, 39), die dazu ausgebildet ist, mindestens eine optische Baugruppe (16, 17, 18) des optischen Systems (14) relativ zu dem mindestens einen Tubus (11, 12) zu bewegen, mit mindestens einer Signalverarbeitungseinheit (42), die derart ausgebildet ist, dass sie die mindestens eine Bildstabilisierungseinrichtung (33, 36, 39) in einem Modus aus einer Mehrzahl von Modi (84, 86) ansteuert, wobei jedem Modus eine jeweilige Bewegungssituation des fernoptischen Geräts (10) zugeordnet ist, und mit einer Modusdetektionseinheit (54), die derart ausgebildet ist, dass sie den Modus aus der Mehrzahl von Modi (84, 86) bestimmt, **dadurch gekennzeichnet, dass**
die Modusdetektionseinheit (54) des Weiteren derart ausgebildet ist, dass sie den Modus bestimmt, indem sie eine Wahrscheinlichkeit für ein Vorliegen einer ersten Bewegungssituation ermittelt, der ein erster Modus (86) zugeordnet ist, und basierend auf einem Vergleich der ermittelten Wahrscheinlichkeit mit einer Zufallszahl eine Entscheidung über eine Ansteuerung in dem ersten Modus (86) trifft.

2. Fernoptisches Gerät nach Anspruch 1, **dadurch gekennzeichnet, dass** die Modusdetektionseinheit (54) derart ausgebildet ist, dass sie eine Entscheidung über eine Ansteuerung in dem ersten Modus (86) trifft, indem sie eine Entscheidung über einen Wechsel in den ersten Modus (86) trifft, wenn die mindestens eine Signalverarbeitungseinheit (42) die mindestens eine Bildstabilisierungseinrichtung (33, 36, 39) in einem anderen zweiten Modus (84) ansteuert, und eine Entscheidung über ein Verbleiben in dem ersten Modus (86) trifft, wenn die mindestens eine Signalverarbeitungseinheit die mindestens eine Bildstabilisierungseinrichtung (33, 36, 39) bereits in dem ersten Modus (86) ansteuert.

3. Fernoptisches Gerät nach Anspruch 1 oder 2, **dadurch gekennzeichnet, dass** die Modusdetektionseinheit (54) derart ausgebildet ist, dass sie die Wahrscheinlichkeit anhand der Formel

$$p(\sigma, T, k) = \frac{1}{1 + e^{-k(\sigma - T)}}$$

ermittelt, wobei p die Wahrscheinlichkeit, k und T jeweils ein Parameter größer Null und σ der Wert eines über einen bestimmten Zeitraum integrierten Eingangssignals (44) ist.

4. Fernoptisches Gerät nach Anspruch 1 oder 2, **dadurch gekennzeichnet, dass** die Modusdetektionseinheit (54) derart ausgebildet ist, dass sie die Wahrscheinlichkeit anhand der Formel

$$p(\sigma, T, k) = \begin{cases} 0 \; f\ddot{u}r \, \sigma < T - k \\ \dfrac{\sigma - (T - k)}{2 \cdot k} \; f\ddot{u}r \, T - k \leq \sigma \leq T + k \\ 1 \; f\ddot{u}r \, \sigma > T + k \end{cases}$$

ermittelt, wobei p die Wahrscheinlichkeit, k und T jeweils ein Parameter größer Null und σ der Wert eines über einen bestimmten Zeitraum integrierten Eingangssignals (44) ist.

5. Fernoptisches Gerät nach einem der Ansprüche 1 bis 4, **dadurch gekennzeichnet, dass** die Modusdetektionseinheit (54) derart ausgebildet ist, dass die Wahrscheinlichkeit abhängig von einem über einen bestimmten Zeitraum integrierten Eingangssignal (44) ist, wobei das Eingangssignal (44) eine Geschwindigkeit oder Winkelgeschwindigkeit des fernoptisches Geräts (10) ist.

6. Fernoptisches Gerät nach einem der Ansprüche 1 bis 4, **dadurch gekennzeichnet, dass** die Modusdetektionseinheit (54) derart ausgebildet ist, dass die Wahrscheinlichkeit abhängig von einem über einen bestimmten Zeitraum integrierten Eingangssignal (44) ist, wobei das Eingangssignal (44) eine Beschleunigung oder Winkelbeschleunigung des fernoptisches Geräts (10) ist.

7. Fernoptisches Gerät nach einem der Ansprüche 1 bis 6, **dadurch gekennzeichnet, dass** die Modusdetektionseinheit (54) derart ausgebildet ist, dass die Zufallszahl aus einem Rauschen eines Sensorsignals (47) eines Sensorelements (46) des fernoptischen Geräts (10) gebildet ist.

8. Fernoptisches Gerät nach Anspruch 3 oder 4, **dadurch gekennzeichnet, dass** die Modusdetektionseinheit (54) derart ausgebildet ist, dass sie die Parameter k und T abhängig von einem Modus (84, 86), in dem die Bildstabilisierungseinrichtung (33, 36, 39) angesteuert ist, festsetzt und/oder abhängig von einem Anwendungsfall festsetzt.

9. Fernoptisches Gerät nach Anspruch 8, **dadurch gekennzeichnet, dass** das fernoptische Gerät (10) eine Schnittstelleneinrichtung (74) aufweist, die dazu ausgebildet ist, den Anwendungsfall einzustellen.

10. Fernoptisches Gerät nach Anspruch 8 oder 9, **dadurch gekennzeichnet, dass** das fernoptische Gerät (10) des Weiteren eine Speichereinheit (55) aufweist, in der mindestens ein Referenzprofil gespeichert ist, wobei einem jeweiligen Referenzprofil jeweils ein Anwendungsfall zugeordnet ist, und die Modusdetektionseinheit (54) derart ausgebildet ist, dass sie anhand eines Vergleichs eines Verlaufs des Eingangssignals (44) über einen bestimmten Zeitraum mit dem mindestens einen Referenzprofil den Anwendungsfall festsetzt.

11. Fernoptisches Gerät nach Anspruch 10, **dadurch gekennzeichnet, dass** die Modusdetektionseinheit (54) derart ausgebildet ist, dass sie den Anwendungsfall kontinuierlich oder in regelmäßigen Zeitabständen festsetzt.

12. Verfahren zum Bestimmen eines Modus für eine Ansteuerung einer Bildstabilisierungseinrichtung (33, 36, 39) in einem fernoptisches Gerät (10), wobei die Bildstabilisierungseinrichtung (33, 36, 39) in einem Modus aus einer Mehrzahl von Modi (84, 86) angesteuert wird, wobei jedem Modus eine jeweilige Bewegungssituation des fernoptischen Geräts (10) zugeordnet ist, **dadurch gekennzeichnet, dass** der Modus aus der Mehrzahl von Modi (84, 86) ermittelt wird, indem eine Wahrscheinlichkeit für ein Vorliegen einer ersten Bewegungssituation bestimmt wird (102, 108), der ein erster Modus (84) zugeordnet ist, und anhand eines Vergleichs (104, 110) der ermittelten Wahrscheinlichkeit mit einer Zufallszahl (100, 106) eine Entscheidung über eine Ansteuerung in dem ersten Modus (84) getroffen wird.

13. Verfahren nach Anspruch 12, **dadurch gekennzeichnet, dass** die Entscheidung über die Ansteuerung in dem ersten Modus (84) getroffen wird, indem eine Entscheidung (104) über einen Wechsel in den ersten Modus (84) getroffen wird, wenn die mindestens eine Bildstabilisierungseinrichtung (33, 36, 39) in einem anderen zweiten Modus (86) angesteuert wird, und eine Entscheidung (110) über ein Verbleiben in dem ersten Modus (84) getroffen wird, wenn die mindestens eine Bildstabilisierungseinrichtung (33, 36, 39) bereits in dem ersten Modus (84) angesteuert wird.

14. Computerprogramm mit Programmcodemitteln, das dazu ausgebildet ist, alle Schritte eines Verfahrens nach Anspruch 12 oder 13 auszuführen, wenn das Computerprogramm auf einem Computer ausgeführt wird.

15. Computerprogrammprodukt mit Programmcodemitteln, die auf einem computerlesbaren Datenträger gespeichert sind, um ein Verfahren nach Anspruch 12 oder 13 durchzuführen, wenn das Computerprogramm auf einem Computer oder einer entsprechenden Datenverarbeitungseinheit ausgeführt wird.

**Claims**

1. Telescopic appliance (10) having at least one barrel (11, 12) which contains an optical system (14), having at least one image stabilization device (33, 36, 39) which is designed to move at least one optical assembly (16, 17, 18) of the optical system (14) relative to the at least one barrel (11, 12), having at least one signal processing unit (42) which is designed such that it actuates the at least one image stabilization device (33, 36, 39) in one mode from a plurality of modes (84, 86), wherein each mode has an associated respective movement situation for the telescopic appliance (10), and having a mode detection unit (54) which is designed such that it determines the mode from the plurality of modes (84, 86), **characterized in that** the mode detection unit (54) is furthermore designed such that it determines the mode by ascertaining a probability of presence of a first movement situation which has an associated first mode (86), and takes a comparison of the ascertained probability with a random number as a basis for making a decision about actuation in the first mode (86).

2. Telescopic appliance according to Claim 1, **characterized in that** the mode detection unit (54) is designed such that it makes a decision about actuation in the first mode (86) by making a decision about changing to the first mode (86) when the at least one signal processing unit (42) actuates the at least one image stabilization device (33, 36, 39) in another, second mode (84), and makes a decision about remaining in the first mode (86) when the at least one signal processing unit is already actuating the at least one image stabilization device (33, 36, 39) in the first mode (86).

3. Telescopic appliance according to Claim 1 or 2, **characterized in that** the mode detection unit (54) is designed such that it ascertains the probability using the formula

$$p(\sigma, T, k) = \frac{1}{1 + e^{-k(\sigma - T)}}$$,

where p is the probability, k and T are each a parameter greater than zero and $\sigma$ is the value of an input signal (44) integrated over a particular period of time.

4. Telescopic appliance according to Claim 1 or 2, **characterized in that** the mode detection unit (54) is designed such that it ascertains the probability using the formula

$$p(\sigma, T, k) = \begin{cases} 0 \ for \ \sigma < T - k \\ \dfrac{\sigma - (T - k)}{2 \cdot k} \ for \ T - k \leq \sigma \leq T + k \\ 1 \ for \ \sigma > T + k \end{cases}$$,

where p is the probability, k and T are each a parameter greater than zero and $\sigma$ is the value of an input signal (44) integrated over a particular period of time.

5. Telescopic appliance according to one of Claims 1 to 4, **characterized in that** the mode detection unit (54) is designed such that the probability is dependent on an input signal (44) integrated over a particular period of time, wherein the input signal (44) is a speed or angular speed of the telescopic appliance (10).

6. Telescopic appliance according to one of Claims 1 to 4, **characterized in that** the mode detection unit (54) is designed such that the probability is dependent on an input signal (44) integrated over a particular period of time, wherein the input signal (44) is an acceleration or angular acceleration of the telescopic appliance (10).

7. Telescopic appliance according to one of Claims 1 to 6, **characterized in that** the mode detection unit (54) is designed such that the random number is formed from a noise in a sensor signal (47) from a sensor element (46) of the telescopic appliance (10).

8. Telescopic appliance according to Claim 3 or 4, **characterized in that** the mode detection unit (54) is designed such that it stipulates the parameters k and T on the basis of a mode (84, 86) in which the image stabilization device (33, 36, 39) is actuated and/or stipulates them on the basis of an instance of application.

9. Telescopic appliance according to Claim 8, **characterized in that** the telescopic appliance (10) has an interface device (74) which is designed to set the instance of application.

10. Telescopic appliance according to Claim 8 or 9, **characterized in that** the telescopic appliance (10) furthermore has a memory unit (55) which stores at least one reference profile, wherein a respective reference profile has a respective associated instance of application, and the mode detection unit (54) is designed such that it uses a comparison of a trend of the input signal (44) over a particular period of time with the at least one reference profile to stipulate the instance of application.

11. Telescopic appliance according to Claim 10, **characterized in that** the mode detection unit (54) is designed such that it stipulates the incidence of application continuously or at regular intervals of time.

12. Method for determining a mode for actuation of an image stabilization device (33, 36, 39) in a telescopic appliance (10), wherein the image stabilization device (33, 36, 39) is actuated in one mode from a plurality of modes (84, 86), wherein each mode has an associated respective movement situation for the telescopic appliance (10), **characterized in that**

the mode from the plurality of modes (84, 86) is ascertained by determining (102, 108) a probability of presence of a first movement situation which has an associated first mode (84) and using a comparison (104, 110) of the ascertained probability with a random number (100, 106) to make a decision about actuation in the first mode (84).

13. Method according to Claim 12, **characterized in that** the decision about the actuation in the first mode (84) is made by making a decision (104) about changing to the first mode (84) when the at least one image stabilization device (33, 36, 39) is being actuated in another, second mode (86), and a decision (110) about remaining in the first mode (84) is made when the at least one image stabilization device (33, 36, 39) is already being actuated in the first mode (84).

14. Computer program having program code means which is designed to execute all the steps of a method according to Claim 12 or 13 when the computer program is executed on a computer.

15. Computer program product having program code means which are stored on a computer-readable data storage medium in order to perform a method according to Claim 12 or 13 when the computer program is executed on a computer or an appropriate data processing unit.

**Revendications**

1. Appareil optique (10) d'observation à distance présentant
au moins un tube (11, 12) dans lequel est disposé un système optique (14),
au moins un dispositif (33, 36, 39) de stabilisation d'image configuré pour déplacer au moins un module optique (16, 17, 18) du système optique (14) par rapport au tube ou aux tubes (11, 12),

EP 2 615 826 B1

au moins une unité (42) de traitement de signaux configurée de manière à amener le ou les dispositifs (33, 36, 39) de stabilisation d'image à travailler en un parmi plusieurs modes (84, 86), une situation de déplacement de l'appareil optique (10) d'observation à distance étant associée à chaque mode, et

une unité (54) de détection de mode configurée de manière à déterminer le mode actif parmi les différents modes (84, 86),

**caractérisé en ce que**

l'unité (54) de détection de mode est en outre configurée de manière à déterminer le mode en déterminant la probabilité de la présence d'une première situation de déplacement à laquelle un premier mode (86) est associé et pour prendre la décision de passer dans le premier mode (86) sur la base d'une comparaison entre la probabilité ainsi déterminée et le nombre d'occurrences.

2. Appareil optique d'observation à distance selon la revendication 1, **caractérisé en ce que** l'unité (54) de détection de mode est configurée de manière à prendre la décision de passer dans le premier mode (86) en décidant de passer dans le premier mode (86) si la ou les unités (42) de traitement de signaux amènent le ou les dispositifs (33, 36, 39) de stabilisation d'image dans un deuxième mode (84) différent, et de décider de rester dans le premier mode (86) si la ou les unités de traitement de signaux ont déjà commandé le passage du ou des dispositifs (33, 36, 39) de stabilisation d'image dans le premier mode (86).

3. Appareil optique d'observation à distance selon les revendications 1 ou 2, **caractérisé en ce que** l'unité (54) de détection de mode est configurée de manière à déterminer la probabilité à l'aide de la formule :

$$p(\sigma,T,k)=\frac{1}{1+e^{-k(\sigma-T)}}$$

dans laquelle p représente la probabilité, k et T représentent chacun un paramètre supérieur à zéro et σ représente la valeur d'un signal d'entrée (44) intégré sur une durée définie.

4. Appareil optique d'observation à distance selon les revendications 1 ou 2, **caractérisé en ce que** l'unité (54) de détection de mode est configurée de manière à déterminer la probabilité à l'aide de la formule :

$$p(\sigma,T,k)=\begin{cases}0 \ pour \ \sigma < T-k \\ \dfrac{\sigma-(T-k)}{2\cdot k} \ pour \ T-k \leq \sigma \leq T+k \\ 1 \ pour \ \sigma > T+k\end{cases}$$

dans laquelle p représente la probabilité, k et T représentent chacun un paramètre supérieur à zéro et σ représente la valeur d'un signal d'entrée (44) intégré sur une durée définie et "für" signifie "pour".

5. Appareil optique d'observation à distance selon les revendications 1 à 4, **caractérisé en ce que** l'unité (54) de détection de mode est configurée de telle sorte que la probabilité dépend d'un signal d'entrée (44) intégré sur une durée définie, le signal d'entrée (44) étant la vitesse ou la vitesse angulaire de l'appareil optique (10) d'observation à distance.

6. Appareil optique d'observation à distance selon les revendications 1 à 4, **caractérisé en ce que** l'unité (54) de détection de mode est configurée de telle sorte que la probabilité dépend d'un signal d'entrée (44) intégré sur une durée définie, le signal d'entrée (44) étant une accélération ou une accélération angulaire de l'appareil optique (10) d'observation à distance.

7. Appareil optique d'observation à distance selon les revendications 1 à 6, **caractérisé en ce que** l'unité (54) de détection de mode est configurée de telle sorte que le nombre d'occurrences soit formé du bruit d'un signal (47) d'un élément de capteur (46) de l'appareil optique (10) d'observation à distance.

8. Appareil optique d'observation à distance selon la revendication 3 ou 4, **caractérisé en ce que** l'unité (54) de détection de mode est configurée de manière à définir les paramètres k et T en fonction du mode (84, 86) dans lequel le dispositif (33, 36, 39) de stabilisation d'image est commandé ou de les définir en fonction de l'application.

9. Appareil optique d'observation à distance selon la revendication 8, **caractérisé en ce que** l'appareil optique (10) d'observation à distance présente un dispositif d'interface (74) configuré pour établir l'application.

10. Appareil optique d'observation à distance selon les revendications 8 ou 9, **caractérisé en ce que** l'appareil optique (10) d'observation à distance présente en outre une unité de mémoire (55) dans laquelle au moins un profil de référence est conservé, chaque application étant associée à un profil de référence et l'unité (54) de détection de mode étant configurée de manière à définir l'application à l'aide d'une comparaison entre l'évolution du signal d'entrée (44) sur une durée définie et le ou les profils de référence.

11. Appareil optique d'observation à distance selon la revendication 10, **caractérisé en ce que** l'unité (54) de détection de mode est configurée de manière à définir de manière continue ou à intervalles réguliers l'application.

12. Procédé de détermination d'un mode de commande d'un dispositif (33, 36, 39) de stabilisation d'image dans un appareil optique (10) d'observation à distance, le dispositif (33, 36, 39) de stabilisation d'image étant amené à fonctionner dans un parmi plusieurs modes (84, 86), une situation de déplacement de l'appareil optique (10) d'observation à distance étant associée à chaque mode,
**caractérisé en ce que**
le mode est déterminé à partir des différents modes (84, 86) en déterminant (102, 108) une probabilité de la présence d'une première situation de déplacement à laquelle un premier mode (84) est associé et
**en ce que** la décision de passer dans le premier mode (84) est prise à l'aide d'une comparaison (104, 110) entre la probabilité déterminée et un nombre d'occurrences (100, 106).

13. Procédé selon la revendication 12, **caractérisé en ce que** la décision du passage dans le premier mode (84) est prise en prenant la décision (104) du passage dans le premier mode (84) si la ou les unités (42) de traitement de signaux amènent le ou les dispositifs (33, 36, 39) de stabilisation d'image dans un deuxième mode (84) différent, et en décidant (110) de rester dans le premier mode (86) si la ou les unités de traitement de signaux ont déjà commandé le passage du ou des dispositifs (33, 36, 39) de stabilisation d'image dans le premier mode (84).

14. Programme informatique doté de moyens de code de programme et configuré pour exécuter toutes les étapes d'un procédé selon les revendications 12 ou 13 lorsque le programme informatique est exécuté sur un ordinateur.

15. Produit de programme informatique doté de moyens de code de programme conservés sur un support de données lisibles par ordinateur en vue de mettre en oeuvre un procédé selon les revendications 12 ou 13 lorsque le programme informatique est exécuté sur un ordinateur ou sur une unité appropriée de traitement de données.

Fig. 1

EP 2 615 826 B1

Fig. 2

Fig. 3

EP 2 615 826 B1

Fig. 4

Fig. 5

Fig. 6

EP 2 615 826 B1

102',108'

| 44 | | 55 |

102,108 → **Bestimmung Profilverlauf** → **Vergleich Profilverlauf ≙ Referenzprofil ?** → **Festsetzung von $T_i$ und $k_i$** → 102,108

112　　　114　　　116

Fig. 7

Fig. 8a

Fig. 8b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19937775 A1
- US 6384976 B1
- US 7460154 B2
- EP 1980904 A2
- EP 1708019 A1
- US 5930530 A